# EUROPEAN PATENT APPLICATION

(11) **EP 4 053 208 A1**
(43) Date of publication of application: **07.09.2022**
(21) Application number: 20882131.4
(22) Date of filing: 20.08.2020
(51) Int. Cl.: C08L 9/06, B60C 1/00, C08K 3/04, C08K 3/36, C08L 9/00, C08L 45/02, C08L 47/00

(54) **TIRE TREAD RUBBER COMPOSITION**

(30) Priority: 01.11.2019 JP 2019200106; 18.06.2020 JP 2020105607
(71) Applicant: BRIDGESTONE CORPORATION, Chuo-ku Tokyo 104-8340 (JP)
(72) Inventor: ZAMA, Aya, Tokyo 104-8340 (JP)
(74) Representative: Marks & Clerk LLP
(86) International application number: PCT/JP2020/031526
(87) International publication number: WO 2021/084858

(57) **Abstract**

Provided is a tire tread rubber composition capable of obtaining a tire having improved or desirable tread properties. Disclosed herein are tire tread rubber compositions comprising a specified elastomer component, reinforcing silica filler, a specified hydrocarbon resin, and a cure package. The elastomer component includes styrene-butadiene rubber and polybutadiene rubber.

## Description

### TECHNICAL FIELD

The present application is directed to a rubber composition for use in tire treads.

### BACKGROUND

Tires comprise many components including a road-contacting tread. The particular ingredients used in the rubber composition which comprises the tire tread may vary. Formulation of tire tread rubber compositions is a complex science since changes to the formulation which result in an improvement in one property (e.g., rolling resistance) may result in deterioration of another property (e.g., dry traction).

### SUMMARY

Disclosed herein are rubber compositions for use in tire treads.

In a first embodiment, a tire tread rubber composition is disclosed. The composition comprises (a) 100 parts of an elastomer component comprising (i) 30-60 parts of styrene-butadiene rubber, and (ii) 30-60 parts of polybutadiene rubber having a cis bond content of at least 95% and a Tg of less than -101°C, wherein the elastomer component has a vinyl bond content of 8% to 20%; (b) at least one reinforcing silica filler in an amount of 81-120 phr; (c) no more than 15 phr of carbon black filler; (d) 10-35 phr of at least one hydrocarbon resin having a Tg of about 40°C to about 100°C; and (e) a cure package.

In the first embodiment, the styrene-butadiene rubber preferably comprises two or more types of styrene-butadiene rubbers. In the first embodiment, a maximum difference in Tg among the two or more types of styrene-butadiene rubbers is preferably 20°C to 40°C.

In the first embodiment, the hydrocarbon resin of (d) preferably comprises two types of resins selected from the group consisting of a C5 resin, a C5-C9 resin, a C9 resin, and a dicyclopentadiene resin. In the first embodiment, a difference in Tg between the two types of resins is 30°C to 50°C.

### DETAILED DESCRIPTION

Disclosed herein are rubber compositions for use in tire treads.

In a first embodiment, a tire tread rubber composition is disclosed. The composition comprises (a) 100 parts of an elastomer component comprising (i) 30-60 parts of styrene-butadiene rubber, and (ii) 30-60 parts of polybutadiene rubber having a cis bond content of at least 95% and a Tg of less than -101°C, wherein the elastomer component has a vinyl bond content of 8% to 20%; (b) at least one reinforcing silica filler in an amount of 81-120 phr; (c) no more than 15 phr of carbon black filler; (d) 10-35 phr of at least one hydrocarbon resin having a Tg of about 40°C to about 100°C; and (e) a cure package.

When the rubber composition comprises the polybutadiene rubber having a low Tg and the styrene-butadiene rubber having a high Tg, snow performance (e.g., snow traction) at low temperature, wet performance (e.g., wet traction) and dry µ are improved. When the rubber composition comprises the above-described amount of the reinforcing silica filler, wet performance, dry µ and dry handing are improved. When the rubber composition comprises the above-described hydrocarbon resin, wet performance and dry µ are improved.

### [Definitions]

The terminology as set forth herein is for description of the embodiments only and should not be construed as limiting the invention as a whole.

As used herein, the term "majority" refers to more than 50%.

As used herein, the abbreviation "Mn" is used for number average molecular weight.

As used herein, the abbreviation "Mp" is used for peak molecular weight.

As used herein, the abbreviation "Mw" is used for weight average molecular weight.

Unless otherwise indicated herein, the term "Mooney viscosity" refers to the Mooney viscosity, ML₁₊₄. As those of skill in the art will understand, a rubber composition's Mooney viscosity is measured prior to vulcanization or curing.

As used herein, the term "natural rubber" means naturally occurring rubber such as can be harvested from sources such as *Hevea* rubber trees and *non-Hevea* sources *(e.g.,* guayule shrubs and dandelions such as TKS). In other words, the term "natural rubber" should be construed so as to exclude synthetic polyisoprene.

As used herein, the term "phr" means parts per one hundred parts rubber. The one hundred parts rubber is also referred to herein as 100 parts of an elastomer component.

As used herein the term "polyisoprene" means synthetic polyisoprene. In other words, the term is used to indicate a polymer that is manufactured from isoprene monomers, and should not be construed as including naturally occurring rubber *(e.g., Hevea* natural rubber, guayule-sourced natural rubber, or dandelion-sourced natural rubber). However, the term polyisoprene should be construed as including polyisoprenes manufactured from natural sources of isoprene monomer.

As used herein, the term "tread," refers to both the portion of a tire that comes into contact with the road under normal inflation and load as well as any subtread.

### [Tire Tread Rubber Composition]

As mentioned above, the first embodiment is directed to a tire tread rubber composition. The subject rubber compositions are used in preparing treads for tires, generally by a process which includes forming of a tread pattern by molding and curing one of the subject rubber compositions. Thus, the tire treads will contain a cured form of one of the tire tread rubber compositions. The tire tread rubber compositions may be present in the form of a tread which has been formed but not yet incorporated into a tire and/or they may be present in a tread which forms part of a tire.

According to the first embodiment disclosed herein, the Tg of the overall rubber composition may vary. In certain embodiments of the first embodiment, the rubber composition has a Tg of about -50°C to about -30°C. In certain embodiments of the first embodiment, the rubber composition has a Tg of -50°C to -30°C *(e.g.,* -50°C, -49°C, -48°C, -47°C, -46°C, -45°C, -44°C, -43°C, -42°C, -41°C, -40°C, -39°C, -38°C, -37°C, -36°C, -35°C, -34°C, - 33°C, -32°C, -31°C, or -30°C), about -45°C to about -35°C, or -45°C to - 35°C *(e.g.,* -45°C, -44°C, -43°C, -42°C, -41°C, -40°C, -39°C, -38°C, -37°C, - 36°C, or -35°C).

### [Elastomer Component]

As mentioned above, according to the first embodiment, the tire tread rubber composition comprises (includes) 100 parts of an elastomer component. The ingredients of the elastomer component include styrene-butadiene rubber; polybutadiene rubber; and in some embodiments natural rubber, polyisoprene, or a combination thereof. The total amount of 100 parts of elastomer or rubber is used so that the amount of other ingredients may be listed in amounts of phr or the number of parts per hundred parts rubber (or 100 parts of the elastomer component). As a non-limiting example, for a rubber composition containing 75 parts of styrene-butadiene rubber, 25 parts of polybutadiene rubber and 85 parts of reinforcing silica filler, the amount of silica filler can also be described as 85 phr.

As mentioned above, according to the first embodiment, the 100 parts of elastomer component comprises (includes) (i) 30 parts to 60 parts *(e.g.,* 30 parts, 35 parts, 40 parts, 45 parts, 50 parts, 55 parts, or 60 parts) of styrene-butadiene rubber, and (ii) 30 parts to 60 parts *(e.g.,* 30 parts, 35 parts, 40 parts, 45 parts, 50 parts, 55 parts, or 60 parts) of polybutadiene rubber having a cis bond content of at least 95% and a Tg (i.e., glass transition temperature) of less than -101°C. In certain embodiments of the first embodiment, the total amount of (i) and (ii) is 90 parts to 100 parts *(e.g.,* 90 parts, 95 parts, 99 parts or 100 parts) or even 100 parts; in certain such embodiments, (i) is present in an amount of 40 parts to 60 parts *(e.g.,* 40 parts, 45 parts, 50 parts, 55 parts, or 60 parts) and has a vinyl bond content of no more than 20% *(e.g.,* 20%, 19%, 18%, 17%, 16%, 15%, 14%, 13%, 12%, 11%, 10%, 9% or less) and a Tg of about -40°C to about -50°C *(e.g.,* -40°C, -41°C, -42°C, -43°C, - 44°C, -45°C, -46°C, -47°C, -48°C, -49°C, or -50°C) and (ii) is present in an amount of 40 parts to 60 parts *(e.g.,* 40 parts, 45 parts, 50 parts, 55 parts, or 60 parts). In certain embodiments of the first embodiment, the elastomer component is free of *(i.e.,* contains 0 parts of) natural rubber and polyisoprene. In certain embodiments of the first embodiment, the elastomer component comprises (includes) (i) in an amount of 30 parts to 50 parts *(e.g.,* 30 parts, 35 parts, 40 parts, 45 parts, or 50 parts), (ii) is present in an amount of 30 parts to 50 parts *(e.g.,* 30 parts, 35 parts, 40 parts, 45 parts, or 50 parts) and the elastomer component further comprises (also includes) (iii) 20 parts to 40 parts *(e.g.,* 20 parts, 25 parts, 30 parts, 35 parts, or 40 parts) of natural rubber, polyisoprene, or a combination thereof. In certain embodiments of the first embodiment, the 100 parts of elastomer component consists (only) of (i) and (ii), in amounts as discussed above. In other embodiments of the first embodiment, the 100 parts of elastomer component consists (only) of (i), (ii), and (iii), in amounts as discussed above. In yet other embodiments of the first embodiment, the 100 parts of elastomer component includes in addition to (i), (ii) and (iii), one or more additional rubbers (iv). According to the first embodiment, when one or more additional rubbers (iv) is present, the amount will generally be limited to no more than 20 parts, no more than 15 parts, no more than 10 parts, or no more than 5 parts. In certain embodiments of the first embodiment, one or more additional rubbers (iv) are selected from diene monomer-containing rubbers; in certain such embodiments, the one or more additional rubbers (iv) are selected from the group consisting of styrene-isoprene rubber, butadiene-isoprene-rubber, styrene-isoprene-butadiene rubber, butyl rubber (both halogenated and non-halogenated), neoprene (polychloroprene), ethylenepropylene rubber (EPR), ethylene-butylene rubber (EBR), ethylenepropylene-diene rubber (EPDM), and combinations thereof.

When the elastomer is oil-extended, the "Tg value" referred to herein for the elastomer represent a Tg of the elastomer including an oil component (extender oil). While when the elastomer is non-oil-extended, the "Tg value" referred to herein for the elastomer represent a Tg measurement made upon the elastomer without any oil-extension. Elastomer or polymer Tg values may be measured using a differential scanning calorimeter (DSC) instrument, such as manufactured by TA Instruments (New Castle, Delaware), where the measurement is conducted using a temperature elevation of 10°C/minute after cooling at -120°C. Thereafter, a tangent is drawn to the base lines before and after the jump of the DSC curve. The temperature on the DSC curve (read at the point corresponding to the middle of the two contact points) can be used as Tg.

According to the first embodiment, the elastomer component comprises (includes) as (i) styrene-butadiene rubber. According to the first embodiment, (i) of the elastomer component consists of styrene-butadiene rubber. One or more than one *(e.g.,* two, three, or more) styrene-butadiene rubbers may be used as (i). The styrene-butadiene rubber(s) of (i) may be prepared by either solution polymerization or by emulsion polymerization. In certain preferred embodiments of the first embodiment, the only styrene-butadiene rubbers used in (i) are prepared by solution polymerization. In other embodiments of the first embodiment, the only styrene-butadiene rubbers used in (i) are prepared by emulsion polymerization. In certain embodiments of the first embodiment, when more than one styrene-butadiene rubber is used for (i) the rubbers are a combination of solution polymerized SBR and emulsion polymerized SBR *(e.g.,* one solution SBR and one emulsion SBR). In certain preferred embodiments of the first embodiment, the elastomer component contains less than 20 parts *(e.g.,* 19 parts, 18 parts, 17 parts, 16 parts, 15 parts, 14 parts, 13 parts, 12 parts, 11 parts, 10 parts, 9 parts, 8 parts, 7 parts, 6 parts, 5 parts, 4 parts, 3 parts, 2 parts, 1 parts, or 0 parts) of emulsion SBR, less than 15 parts of emulsion SBR, less than 10 parts of emulsion SBR, no more than 5 parts of emulsion SBR *(e.g.,* 5 parts, 4 parts, 3 parts, 2 parts, 1 parts or 0 parts), or 0 parts of emulsion SBR. In certain embodiments of the first embodiment, limitation of the amount of emulsion SBR (as discussed above) can be advantageous to the stiffness of the rubber composition and to achieving satisfactory rolling resistance performance.

According to the first embodiment, the styrene-butadiene rubber(s) of (i) may be functionalized or non-functionalized. As used herein, the term "functionalized" should be understood to encompass the use of both functional groups and coupling agents. One or more than one type of functional group may be utilized for each SBR. Generally, a functional group may be present at the head of the polymer, at the tail of the polymer, along the backbone of the polymer chain, or a combination thereof. Functional groups present at one or both terminals of a polymer are generally the result of the use of a functional initiator, a functional terminator, or both. Alternatively or additionally, the functional group may be present as a result of coupling of multiple polymer chains using a coupling agent (as described below). In certain preferred embodiments of the first embodiment, at least one styrene-butadiene rubber of (i) is functionalized, preferably with a silica-reactive functional group. In certain embodiments of the first embodiment, (i) consists (only) of one styrene-butadiene rubber; in certain such embodiments, the styrene-butadiene rubber is functionalized with a silica-reactive functional group. In other preferred embodiments of the first embodiment, (i) consists (only) of one styrene-butadiene rubber which is unfunctionalized *(i.e.,* contains no functional group and no coupling agent). In other embodiments of the first embodiment, (i) consists of more than one styrene-butadiene rubber (e.g., two, three, or more); in certain such embodiments, at least one of the styrene-butadiene rubbers is functionalized with a silica-reactive functional group. Non-limiting examples of silica-reactive functional groups generally include nitrogen-containing functional groups, silicon-containing functional groups, oxygen- or sulfur-containing functional groups, and metal-containing functional groups, as discussed in more detail below.

When a functionalized SBR is used in (i) for certain embodiments of the first embodiment, the functionalization can be achieved by adding a functional group to one or both terminus of the polymer, by adding a functional group to the backbone of the polymer (or a combination of the foregoing) or by coupling more than one polymer chains to a coupling agent, or by a combination thereof, such effects can be achieved by treating a living polymer with coupling agents, functionalizing agents, or a combination thereof which serve to couple and/or functionalize other chains. In certain embodiments of the first embodiment, the functionalized SBR of (i) contains one or more functional groups but is not coupled *(i.e.,* does not contain any coupling agents). The coupling agent and/or functionalizing agent can be used at various molar ratios. Alternatively, in certain embodiments of the first embodiment, the functionalized styrene-butadiene rubber of (i) may be silica-reactive merely from the result of using a coupling agent. Although reference is made herein to the use of both coupling agents and functionalizing groups (and compounds used therefor), those skilled in the art appreciate that certain compounds may serve both functions. That is, certain compounds may both couple and provide the polymer chains with a functional group. Those skilled in the art also appreciate that the ability to couple polymer chains may depend upon the amount of coupling agent reacted with the polymer chains. For example, advantageous coupling may be achieved where the coupling agent is added in a one to one ratio between the equivalents of lithium on the initiator and equivalents of leaving groups *(e.g.,* halogen atoms) on the coupling agent. Non-limiting examples of coupling agents include metal halides, metalloid halides, alkoxysilanes, alkoxystannanes, and combinations thereof.

Non-limiting examples of nitrogen-containing functional groups that can be utilized in certain embodiments of the first embodiment as a silica-reactive functional group in the styrene-butadiene rubber of (i) include, but are not limited to, a substituted or unsubstituted amino group, an amide residue, an isocyanate group, an imidazolyl group, an indolyl group, an imino group, a nitrile group, a pyridyl group, and a ketimine group. The foregoing substituted or unsubstituted amino group should be understood to include a primary alkylamine, a secondary alkylamine, or a cyclic amine, and an amino group derived from a substituted or unsubstituted imine. In certain embodiments of the first embodiment, the styrene-butadiene rubber of (i) comprises at least one silica-reactive functional group selected from the foregoing list of nitrogen-containing functional groups.

In certain embodiments of the first embodiment, the styrene-butadiene rubber of (i) includes a silica-reactive functional group from a compound which includes nitrogen in the form of an imino group. Such an imino-containing functional group may be added by reacting the active terminal of a polymer chain with a compound having the following formula (I): 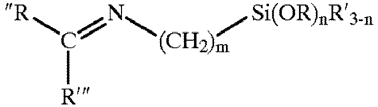 wherein R, R', R", and R'" each independently are selected from a group having 1 to 18 carbon atoms (e.g., 1, 2, 3, 4, 5, 6, 7, 8, 9, 10, 11, 12, 13, 14, 15, 16, 17, or 18 carbon atoms) selected from the group consisting of an alkyl group, an allyl group, and an aryl group; m and n are integers of 1 to 20 *(e.g.,* 1, 2, 3, 4, 5, 6, 7, 8, 9, 10, 11, 12, 13, 14, 15, 16, 17, 18, 19, or 20) and 1 to 3 (1, 2, or 3), respectively. Each of R, R', R", and R‴ are preferably hydrocarbyl and contain no heteroatoms. In certain embodiments of the first embodiment, each R and R' are independently selected from an alkyl group having 1 to 6 carbon atoms (e.g., 1, 2, 3, 4, 5, or 6 carbon atoms), preferably 1 to 3 carbon atoms (e.g., 1, 2, or 3 carbon atoms). In certain embodiments of the first embodiment, m is an integer of 2 to 6 *(e.g.,* 2, 3, 4, 5, or 6), preferably 2 to 3. In certain embodiments of the first embodiment, R'" is selected from a group having 1 to 6 carbon atoms (e.g., 1, 2, 3, 4, 5, or 6 carbon atoms), preferably 2 to 4 carbon atoms *(e.g.,* 2, 3, or 4 carbon atoms). In certain embodiments of the first embodiment, R" is selected from an alkyl group having 1 to 6 carbon atoms (e.g., 1, 2, 3, 4, 5, or 6 carbon atoms), preferably 1 to 3 carbon atoms (e.g., 1, 2, or 3 carbon atoms), most preferably 1 carbon atom (e.g., methyl). In certain embodiments of the first embodiment, n is 3 resulting in a compound with a trihydrocarboxysilane moiety such as a trialkoxysilane moiety. Non-limiting examples of compounds having an imino group and meeting formula (I) above, which are suitable for providing the silica-reactive functional group for the styrene-butadiene rubber of (i), include, but are not limited to, N-(1,3-dimethylbutylidene)-3-(triethoxysilyl)-1-propaneamine, N-(1-methylethylidene)-3-(triethoxysilyl)-1-propaneamine, N-ethylidene-3-(triethoxysily1)-1-propaneamine, N-(1-methylpropylidene)-3-(triethoxysilyl)-1-propaneamine, and N-(4-N,N-dimethylaminobenzylidene)-3-(triethoxysilyl)-1-propaneamine.

Non-limiting examples of silicon-containing functional groups that can be utilized in certain embodiments of the first embodiment as a silica-reactive functional group in the styrene-butadiene rubber of (i) include, but are not limited to, an organic silyl or siloxy group, and more precisely, the such functional group may be selected from an alkoxysilyl group, an alkylhalosilyl group, a siloxy group, an alkylaminosilyl group, and an alkoxyhalosilyl group. Optionally, the organic silyl or siloxy group may also contain one or more nitrogens. Suitable silicon-containing functional groups for use in functionalizing diene-based elastomer also include those disclosed in U.S. Patent No. 6,369,167, the entire disclosure of which is herein incorporated by reference. In certain embodiments of the first embodiment, the styrene-butadiene rubber of (i) comprises at least one silica-reactive functional group selected from the foregoing list of silicon-containing functional groups.

In certain embodiments of the first embodiment wherein the styrene-butadiene rubber of (i) includes a silica-reactive functional group, the functional group preferably results from a silicon-containing compound having a siloxy group *(e.g.,* a hydrocarbyloxysilane-containing compound), wherein the compound optionally includes a monovalent group having at least one functional group. Such a silicon-containing functional group may be added by reacting the active terminal of a polymer chain with a compound having the following formula (II): 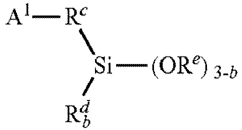 wherein A¹ represents a monovalent group having at least one functional group selected from epoxy, isocyanate, imine, cyano, carboxylic ester, carboxylic anhydride, cyclic tertiary amine, non-cyclic tertiary amine, pyridine, silazane and sulfide; R^{c} represents a single bond or a divalent hydrocarbon group having from 1 to 20 carbon atoms (e.g., 1, 2, 3, 4, 5, 6, 7, 8, 9, 10, 11, 12, 13, 14, 15, 16, 17, 18, 19, or 20 carbon atoms); R^{d} represents a monovalent aliphatic hydrocarbon group having 1 to 20 carbon atoms *(e.g.,* 1, 2, 3, 4, 5, 6, 7, 8, 9, 10, 11, 12, 13, 14, 15, 16, 17, 18, 19, or 20 carbon atoms), a monovalent aromatic hydrocarbon group having 6 to 18 carbon atoms *(e.g.,* 6, 7, 8, 9, 10, 11, 12, 13, 14, 15, 16, 17, or 18 carbon atoms) or a reactive group; R^{e} represents a monovalent aliphatic hydrocarbon group having 1 to 20 carbon atoms (e.g., 1, 2, 3, 4, 5, 6, 7, 8, 9, 10, 11, 12, 13, 14, 15, 16, 17, 18, 19, or 20 carbon atoms) or a monovalent aromatic hydrocarbon group having 6 to 18 carbon atoms *(e.g.,* 6, 7, 8, 9, 10, 11, 12, 13, 14, 15, 16, 17, or 18 carbon atoms); b is an integer of 0 to 2; when more than one R^{d} or OR^{e} are present, each R^{d} and/or OR^{e} may be the same as or different from each other; and an active proton is not contained in a molecule) and/or a partial condensation product thereof. As used herein, a "partial condensation product" refers to a product in which a part (not all) of a SiOR group in the hydrocarbyloxysilane compound is turned into a SiOSi bond by condensation. In certain embodiments of the first embodiment, at least one of the following is met: (a) R^{c} represents a divalent hydrocarbon group having 1 to 12 carbon atoms (e.g., 1, 2, 3, 4, 5, 6, 7, 8, 9, 10, 11, or 12 carbon atoms), 2 to 6 carbon atoms *(e.g.,* 2, 3, 4, 5, or 6 carbon atoms), or 2 to 3 carbon atoms *(e.g.,* 2 or 3 carbon atoms); (b) R^{e} represents a monovalent aliphatic hydrocarbon group having 1 to 12 carbon atoms (e.g., 1, 2, 3, 4, 5, 6, 7, 8, 9, 10, 11, or 12 carbon atoms), 2 to 6 carbon atoms *(e.g.,* 2, 3, 4, 5, or 6 carbon atoms), or 1 to 2 carbon atoms or a monovalent aromatic hydrocarbon group having 6 to 8 carbon atoms; (c) R^{d} represents a monovalent aliphatic hydrocarbon group having 1 to 12 carbon atoms(e.g., 1, 2, 3, 4, 5, 6, 7, 8, 9, 10, 11, or 12 carbon atoms), 2 to 6 carbon atoms (*e.g., 2,* 3, 4, 5, or 6 carbon atoms), or 1 to 2 carbon atoms or a monovalent aromatic hydrocarbon group having 6 to 8 carbon atoms; in certain such embodiments, each of (a), (b) and (c) are met and R^{c}, R^{e} and R^{d} are selected from one of the foregoing groups.

In certain embodiments of the first embodiment, the functional group of the styrene-butadiene rubber of (i) results from a compound represented by Formula (II) wherein A¹ has at least one epoxy group. Non-limiting specific examples of such compounds include 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, (3-glycidoxypropyl)-methyldimethoxysilane, 2-(3,4-epoxycyclohexyl)ethyltrimethoxysilane, 2-(3,4-epoxycyclohexyl)ethyltriethoxysilane, 2-(3,4-epoxycyclohexyl)ethyl(methyl)dimethoxysilane and the like. Among them, 3-glycidoxypropyltrimethoxysilane and 2-(3,4-epoxycyclohexyl)ethyltrimethoxysilane are particularly suited.

In certain embodiments of the first embodiment, the functional group of the styrene-butadiene rubber of (i) results from a compound represented by Formula (II) wherein A¹ has at least one isocyanate group. Non-limiting specific examples of such compounds include 3-isocyanatopropyltrimethoxysilane, 3-isocyanatopropyltriethoxysilane, 3-isocyanatopropylmethyldiethoxysilane, 3-isocyanatopropyltriisopropoxysilane and the like, and among them, 3-isocyanatopropyltrimethoxysilane is particularly preferred.

In certain embodiments of the first embodiment, the functional group of the styrene-butadiene rubber of (i) results from a compound represented by Formula (II) wherein A¹ has at least one imine group. Non-limiting specific examples of such compounds include N-(1,3-dimethylbutylidene)-3-(triethoxysilyl)-1-propaneamine, N-(1-methylethylidene)-3-(triethoxysilyl)-1-propaneamine, N-ethylidene-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, N-(cyclohexylidene)-3-(triethoxysilyl)-1-propaneamine and trimethoxysilyl compounds, methyldiethoxysilyl compounds, ethyldimethoxysilyl compounds and the like each corresponding to the above triethoxysilyl compounds. Among them, N-(1,3-dimethylbutylidene)-3-(triethoxysilyl)-1-propaneamine and N-(1-methylpropylidene)-3-(triethoxysilyl)-1-propaneamine are particularly suited. Also, the imine(amidine) group-containing compounds include preferably 1-[3-trimethoxysilyl]propyl-4,5-dihydroimidazole, 3-(1-hexamethyleneimino)propyl(triethoxy)silane, (1-hexamethyleneimino)methyl(trimethoxy)silane, N-(3-triethoxysilylpropyl)-4,5-dihydroimidazole, N-(3-isopropoxysilylpropyl)-4,5-dihydroimidazole, N-(3-methyldiethoxysilylpropyl)-4,5-dihydroimidazole and the like, and among them, N-(3-triethoxysilylpropyl)-4,5-dihydroimidazole and N-(3-isopropoxysilylpropyl)-4,5-dihydroimidazole are preferred.

In certain embodiments of the first embodiment, the functional group of the styrene-butadiene rubber of (i) results from a compound represented by Formula (II) wherein A¹ has at least one carboxylic ester group. Non-limiting specific examples of such compounds include 3-methacryloyloxypropyltriethoxysilane, 3-methacryloyloxypropyltrimethoxysilane, 3-methacryloyloxypropylmethyldiethoxysilane, 3-methacryloyloxypropyltriisopropoxysilane and the like, and among them, 3-methacryloyloxypropyltriethoxysilane is preferred.

In certain embodiments of the first embodiment, the functional group of the styrene-butadiene rubber of (i) results from a compound represented by Formula (II) wherein A¹ has at least one carboxylic anhydride group. Non-limiting specific examples of such compounds include 3-trimethoxysilylpropylsuccinic anhydride, 3-triethoxysilylpropylsuccinic anhydride, 3-methyldiethoxysilylpropylsuccinic anhydride and the like, and among them, 3-triethoxysilylpropylsuccinic anhydride is preferred.

In certain embodiments of the first embodiment, the functional group of the styrene-butadiene rubber of (i) results from a compound represented by Formula (II) wherein A¹ has at least one cyano group. Non-limiting specific examples of such compounds include 2-cyanoethylpropyltriethoxysilane and the like.

In certain embodiments of the first embodiment, the functional group of the styrene-butadiene rubber of (iii) results from a compound represented by Formula (II) wherein A¹ has at least one cyclic tertiary amine group. Non-limiting specific examples of such compounds include 3-(1-hexamethyleneimino)propyltriethoxysilane, 3-(1-hexamethyleneimino)propyltrimethoxysilane, (1-hexamethyleneimino)methyltriethoxysilane, (1-hexamethyleneimino)methyltrimethoxysilane, 2-(1-hexamethyleneimino)ethyltriethoxysilane, 3-(1-hexamethyleneimino)ethyltrimethoxysilane, 3-(1-pyrrolidinyl)propyltrimethoxysilane, 3-(1-pyrrolidinyl)propyltriethoxysilane, 3-(1-heptamethyleneimino)propyltriethoxysilane, 3-(1-dodecamethyleneimino)propyltriethoxysilane, 3-(1-hexamethyleneimino)propyldiethoxymethylsilane, 3-(1-hexamethyleneimino)propyldiethoxyethylsilane, 3-[10-(triethoxysilyl)decyl]-4-oxazoline and the like. Among them, 3-(1-hexamethyleneimino)propyltriethoxysilane and (1-hexamethyleneimino)methyltriethoxysilane can preferably be listed.

In certain embodiments of the first embodiment, the functional group of the styrene-butadiene rubber of (i) results from a compound represented by Formula (II) wherein A¹ has at least one non-cyclic tertiary amine group. Non-limiting specific examples of such compounds include 3-dimethylaminopropyltriethoxysilane, 3-dimethylaminopropyltrimethoxysilane, 3-diethylaminopropyltriethoxysilane, 3-dimethylaminopropyltrimethoxysilane, 2-dimethylaminoethyltriethoxysilane, 2-dimethylaminoethyltrimethoxysilane, 3-dimethylaminopropyldiethoxymethylsilane, 3-dibutylaminopropyltriethoxysilane and the like, and among them, 3-dimethylaminopropyltriethoxysilane and 3-diethylaminopropyltriethoxysilane are suited.

In certain embodiments of the first embodiment, the functional group of the styrene-butadiene rubber of (i) results from a compound represented by Formula (II) wherein A¹ has at least one pyridine group. Non-limiting specific examples of such compounds include 2-trimethoxysilylethylpyridine and the like.

In those embodiments of the first embodiment wherein the styrene-butadiene rubber of (i) contains a silica-reactive functional group, the functional group preferably results from a compound represented by Formula (II) wherein A¹ has at least one silazane group. Non-limiting specific examples of such compounds include N,N-bis(trimethylsilyl)-aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethyltriethoxysilane, N,N-bis(trimethylsilyl)aminoethylmethyldimethoxysilane, N,N-bis(trimethylsilyl)aminoethylmethyldiethoxysilane and the like. N,N-bis(trimethylsilyl)aminopropyltriethoxysilane, N,N-bis(trimethylsilyl)aminopropylmethyldiethoxysilane or 1-trimethylsilyl-2,2-dimethoxy-1-aza-2-silacyclopentane are particularly preferred.

In those embodiments of the first embodiment wherein a silica-reactive functional group according to formula (II) is used wherein A¹ contains one or more protected nitrogens (as discussed in detail above), may be deprotected or deblocked by hydrolysis or other procedures to convert the protected nitrogen(s) into a primary nitrogen. As a non-limiting example, a nitrogen bonded to two trimethylsilyl groups could be deprotected and converted to a primary amine nitrogen (such a nitrogen would still be bonded to the remainder of the formula (II) compound). Accordingly, in certain embodiments of the first embodiment wherein a silica-reactive functional group of the styrene-butadiene rubber results from use of a compound according to formula (II) wherein A¹ contains one or more protected nitrogens, the functionalized polymer can be understood as containing a functional group resulting from a deprotected (or hydrolyzed) version of the compound.

Non-limiting examples of oxygen- or sulfur-containing functional groups that can be utilized in certain embodiments of the first embodiment as a silica-reactive functional group in the styrene-butadiene rubber of (i) include, but are not limited to, a hydroxyl group, a carboxyl group, an epoxy group, a glycidoxy group, a diglycidylamino group, a cyclic dithiane-derived functional group, an ester group, an aldehyde group, an alkoxy group, a ketone group, a thiocarboxyl group, a thioepoxy group, a thioglycidoxy group, a thiodiglycidylamino group, a thioester group, a thioaldehyde group, a thioalkoxy group, and a thioketone group. In certain embodiments of the first embodiment, the foregoing alkoxy group may be an alcohol-derived alkoxy group derived from a benzophenone. In certain embodiments of the first embodiment, the styrene-butadiene rubber of (i) comprises at least silica-reactive functional group selected from the foregoing list of oxygen- or sulfur-containing functional groups.

According to the first embodiment, the one or more styrene-butadiene rubbers having a silica-reactive functional group of (i) may be prepared by either solution polymerization or by emulsion polymerization. In certain preferred embodiments of the first embodiment, the only styrene-butadiene rubbers having a silica-reactive functional group used in (i) are prepared by solution polymerization. In other embodiments of the first embodiment, the only styrene-butadiene rubbers having a silica-reactive functional group used in (i) are prepared by emulsion polymerization. In certain embodiments of the first embodiment, when more than one styrene-butadiene rubber having a silica-reactive functional group is used for (i) the rubbers are a combination of solution polymerized SBR and emulsion polymerized SBR *(e.g.,* one solution SBR and one emulsion SBR). As mentioned above, in certain embodiments of the first embodiment, the only styrene-butadiene rubber(s) present in the elastomer component (including for the SBR having a silica-reactive functional group) is a solution SBR *(i.e.,* no emulsion SBR is present).

In one or more embodiments of the first embodiment, the coupling agent for the styrene-butadiene rubber of (i) comprises a metal halide or metalloid halide selected from the group comprising compounds expressed by the formula (1) R^{∗}ₙM¹Y₍₄₋ₙ₎, the formula (2) M¹Y₄, and the formula (3) M²Y₃, where each R^{∗} is independently a monovalent organic group having 1 to 20 carbon atoms, M¹ is a tin atom, silicon atom, or germanium atom, M² is a phosphorous atom, Y is a halogen atom, and n is an integer of 0-3.

Exemplary compounds expressed by the formula (1) include halogenated organic metal compounds, and the compounds expressed by the formulas (2) and (3) include halogenated metal compounds.

In the case where M¹ represents a tin atom, the compounds expressed by the formula (1) can be, for example, triphenyltin chloride, tributyltin chloride, triisopropyltin chloride, trihexyltin chloride, trioctyltin chloride, diphenyltin dichloride, dibutyltin dichloride, dihexyltin dichloride, dioctyltin dichloride, phenyltin trichloride, butyltin trichloride, octyltin trichloride and the like. Furthermore, tin tetrachloride, tin tetrabromide and the like can be exemplified as the compounds expressed by formula (2).

In the case where M¹ represents a silicon atom, the compounds expressed by the formula (1) can be, for example, triphenylchlorosilane, trihexylchlorosilane, trioctylchlorosilane, tributylchlorosilane, trimethylchlorosilane, diphenyldichlorosilane, dihexyldichlorosilane, dioctyldichlorosilane, dibutyldichlorosilane, dimethyldichlorosilane, methyltrichlorosilane, phenyltrichlorosilane, hexyltrichlorosilane, octyltrichlorosilane, butyltrichlorosilane, methyltrichlorosilane and the like. Furthermore, silicon tetrachloride, silicon tetrabromide and the like can be exemplified as the compounds expressed by the formula (2). In the case where M¹ represents a germanium atom, the compounds expressed by the formula (1) can be, for example, triphenylgermanium chloride, dibutylgermanium dichloride, diphenylgermanium dichloride, butylgermanium trichloride and the like. Furthermore, germanium tetrachloride, germanium tetrabromide and the like can be exemplified as the compounds expressed by the formula (2). Phosphorous trichloride, phosphorous tribromide and the like can be exemplified as the compounds expressed by the formula (3). In one or more embodiments, mixtures of metal halides and/or metalloid halides can be used.

In one or more embodiments of the first embodiment, the coupling agent for the styrene-butadiene rubber of (i) comprises an alkoxysilane or alkoxystannane selected from the group comprising compounds expressed by the formula (4) R^{∗}ₙM¹(OR^)₄₋ₙ, where each R^{∗} is independently a monovalent organic group having 1 to 20 carbon atoms, M¹ is a tin atom, silicon atom, or germanium atom, OR^{A} is an alkoxy group where R^ is a monovalent organic group, and n is an integer of 0-3.

Exemplary compounds expressed by the formula (4) include tetraethyl orthosilicate, tetramethyl orthosilicate, tetrapropyl orthosilicate, tetraethoxy tin, tetramethoxy tin, and tetrapropoxy tin.

In one or more embodiments of the first embodiment, the styrene-butadiene rubber comprises two or more types of styrene-butadiene rubbers. In one or more embodiments of the first embodiment, a maximum difference in Tg among the two or more types of styrene-butadiene rubbers is 20°C to 40°C. When the rubber composition comprises only one type of styrene-butadiene rubber having a high Tg, wet performance is improved but improvement of snow performance is not so large. When the rubber composition comprises two or more types of styrene-butadiene rubbers having a different Tg respectively, both wet performance and snow performance are highly improved.

According to the first embodiment disclosed herein, the styrene-butadiene rubber(s) present in the elastomer component as (i), may have varying Mw, Mn and polydispersity (Mw/Mn). In certain embodiments of the first embodiment, (i) of the elastomer component includes at least one styrene-butadiene rubber having a Mw of 350,000 grams/mole to 550,000 grams/mole (e.g., 350,000 grams/mole; 375,000 grams/mole; 400,000 grams/mole; 425,000 grams/mole; 450,000 grams/mole; 460,000 grams/mole; 475,000 grams/mole; 500,000 grams/mole; 525,000 grams/mole; or 550,000 grams/mole) and at least other one styrene-butadiene rubber having a Mw of 600,000 grams/mole to 950,000 grams/mole (e.g., 600,000 grams/mole; 625,000 grams/mole; 650,000 grams/mole; 675,000 grams/mole; 700,000 grams/mole; 710,000 grams/mole; 725,000 grams/mole; 750,000 grams/mole; 775,000 grams/mole; 800,000 grams/mole; 825,000 grams/mole; 850,000 grams/mole; 875,000 grams/mole; 900,000 grams/mole; 925,000 grams/mole; or 950,000 grams/mole); in certain such embodiments, (i) includes only one SBR and it has a Mw within one of the foregoing ranges. The Mw values referred to herein are weight average molecular weights which can be determined by using gel permeation chromatography (GPC) calibrated with styrene-butadiene standards and Mark-Houwink constants for the polymer in question.

In certain embodiments of the first embodiment, (i) of the elastomer component includes at least one styrene-butadiene rubber having a Mn of 175,000 grams/mole to 425,000 grams/mole (e.g., 175,000 grams/mole; 200,000 grams/mole; 225,000 grams/mole; 250,000 grams/mole; 275,000 grams/mole; 300,000 grams/mole; 325,000 grams/mole; 350,000 grams/mole; 375,000 grams/mole; 400,000 grams/mole; or 425,000 grams/mole); in certain such embodiments, (i) includes only one SBR and it has a Mn within the foregoing range. In certain embodiments of the first embodiment, (i) of the elastomer component includes at least one styrene-butadiene rubber having a Mn of 175,000 grams/mole to 300,000 grams/mole (e.g., 175,000 grams/mole; 200,000 grams/mole; 225,000 grams/mole; 250,000 grams/mole; 275,000 grams/mole; or 300,000 grams/mole) and at least other one styrene-butadiene rubber having a Mn of 175,000 grams/mole to 250,000 grams/mole *(e.g.,* 175,000 grams/mole; 200,000 grams/mole; 225,000 grams/mole; 240,000 grams/mole or 250,000 grams/mole); in certain such embodiments, (i) includes only one SBR and it has a Mn within one of the foregoing ranges. The Mn values referred to herein are number average molecular weights which can be determined by using gel permeation chromatography (GPC) calibrated with styrene-butadiene standards and Mark-Houwink constants for the polymer in question.

In certain embodiments of the first embodiment disclosed herein, (i) of the elastomer component includes at least one styrene-butadiene rubber having a Mw/Mn (polydispersity) of 1.5 to 2.5 *(e.g.,* 1.5, 1.6, 1.7, 1.8, 1.9, 2, 2.1, 2.2, 2.3, 2.4, or 2.5), preferably 1.7 to 2.5 *(e.g.,* 1.7, 1.8, 1.9, 2, 2.1, 2.2, 2.3, 2.4, or 2.5) and at least other one styrene-butadiene rubber having a Mw/Mn (polydispersity) of 2.3 to 2.8 *(e.g.,* 2.3, 2.4, 2.5, 2.6, 2.7, or 2.8), preferably 2.4 to 2.7 *(e.g.,* 2.4, 2.5, 2.6, or 2.7), more preferably 2.51 to 2.65 *(e.g.,* 2.51, 2.52, 2.53, 2.54, 2.55, 2.56, 2.57, 2.58, 2.59, 2.60, 2.61, 2.62, 2.63, 2.64, or 2.65); in certain such embodiments, (i) includes only one SBR and it has a Mw/Mn within one of the foregoing ranges.

According to the first embodiment disclosed herein, the vinyl bond content *(i.e.,* 1,2-microstructure) of the at least one styrene-butadiene rubber of (i) may vary. In certain embodiments of the first embodiment, at least one the styrene-butadiene rubber of (i) has a vinyl bond content of no more than 20% *(e.g.,* 20%, 19%, 18%, 17%, 16%, 15%, 14%, 13%, 12%, 11%, 10%, or less), and at least other one styrene-butadiene rubber of (i) has a vinyl bond content of 40% to 65% *(e.g.,* 40%, 45%, 50%, 55%, 60%, or 65%), preferably 45% to 63%, more preferably 48% to 62%, even more preferably 50% to 59%, most preferably 52% to 57%. In certain embodiments of the first embodiment, the styrene-butadiene rubber of (i) has a vinyl bond content of 10% to 20% *(e.g.,* 10%, 11%, 12%, 13%, 14%, 15%, 16%, 17%, 18%, 19%, or 20%), or 10% to 15% *(e.g.,* 10%, 11%, 12%, 13%, 14%, or 15%). The styrene-butadiene rubber of (i) may have a vinyl bond content within one of the foregoing ranges, optionally in combination with one or more of the Mw, Mn, Mw/Mn, Tg, and/or styrene monomer content ranges discussed above. The vinyl bond contents referred to herein should be understood as being for the vinyl bond content in the butadiene portion of the SBR polymer chain, and can be determined by H¹-NMR and C¹³-NMR *(e.g.,* using a 300 MHz Gemini 300 NMR Spectrometer System (Varian)). According to the first embodiment disclosed herein, the styrene monomer content *(i.e.,* weight percent of the polymer chain comprising styrene units as opposed to butadiene units) of the styrene-butadiene rubber used in (i) may vary. In certain embodiments of the first embodiment, the styrene-butadiene rubber of (i) has a styrene monomer content of about 15 weight % to about 45 weight %, 15 weight % to 45 weight % *(e.g.,* 15%, 20%, 25%, 30%, 35%, 40%, or 45%), 20 weight % to 40 weight % *(e.g.,* 20%, 25%, 30%, 35%, or 40%), or 20 weight % to 30 weight % *(e.g.,* 20%, 21%, 22%, 23%, 24%, 25%, 26%, 27%, 28%, 29%, 30%), preferably 21 weight % to 28 weight %, more preferably 22 weight % to 27 weight %, even more preferably 23 weight % to 26 weight %, most preferably 24 weight % to 25.5 weight %. The styrene-butadiene rubber of (i) may have a styrene monomer content within one of the foregoing ranges, optionally in combination with one or more of the Mw, Mn, and/or Mw/Mn ranges discussed below, and in certain embodiments optionally in combination with one of the Tg ranges discussed above and/or vinyl bond contents discussed below. The styrene monomer content in total amount of the styrene-butadiene rubbers used in (i) is preferably 10 weight % to 30 weight %, more preferably 15 weight % to 30 weight %, even more preferably 20 weight % to 28 weight %, most preferably 23 weight % to 27 weight %.

In certain embodiments of the first embodiment, the average Tg of the elastomer component is -70°C to -85°C *(e.g.,* -70°C, -71°C, -72°C, -73°C, - 74°C, -75°C, -76°C, -77°C, -78°C, -79°C, -80°C, -81°C, -82°C, -83°C, -84°C, or -85°C), or -75°C to -80°C *(e.g.,* -75°C, -76°C, -77°C, -78°C, -79°C, or - 80°C). The average Tg of the elastomer component can be calculated using the Tg of each rubber present in the 100 parts of elastomer component and accounting for their relative weight percentage. When one (or more) of the rubbers is oil-extended, the amount of the rubber including the oil component (extender oil) and the Tg of the elastomer including the oil component are utilized in calculating the average Tg of the elastomer component.

According to the first embodiment, (ii) of the elastomer component consists of polybutadiene rubber having a cis bond content of at least 95% *(e.g.,* 95%, 96%, 97%, 98%, 99%, or more) and a Tg of less than -101°C *(e.g.,* -102°C, -103°C, -104°C, -105°C, -106°C, -107°C, -108°C, -109°C or less). The cis bond content refers to the cis 1,4-bond content. In certain embodiments of the first embodiment, the polybutadiene rubber may have a cis 1,4-bond content of at least 98% *(e.g.,* 98%, 99%, or more) or at least 99% *(e.g.,* 99%, 99.5%, or more). In certain embodiments of the first embodiment, any polybutadiene rubber used in the tread rubber compositions has a Tg of -105°C or less *(e.g.,* -105°C, -106°C, -107°C, -108°C, -109°C or less). In certain embodiments of the first embodiment, any polybutadiene rubber used in the tread rubber compositions contains less than 3% by weight *(e.g.,* 3%, 2%, 1%, 0.5%, or less), preferably less than 1% by weight *(e.g.,* 1%, 0.5%, or less) or 0% by weight syndiotactic 1,2-polybutadiene. Generally, according to the first embodiment, one or more than one polybutadiene rubber having a cis bond content of at least 95% and a Tg of less than -101°C may be used for (ii). In certain embodiments of the first embodiment, (ii) consists of only one polybutadiene rubber having a cis bond content of at least 95% *(e.g.,* 95%, 96%, 97%, 98%, 99%, or more) and a Tg of less than -101°C.

In certain embodiments of the first embodiment, the elastomer component has a vinyl bond content of 8% to 20%, preferably 8% to 18%, more preferably 8.5% to 15%, even more preferably 8.8% to 12%, most preferably 9.1% to 11.7%, with respect to the whole elastomer component. The "vinyl bond content of the elastomer" referred to herein should be understood as being for the vinyl bond content in the butadiene portion of the elastomer component, and can be determined by H¹-NMR and C¹³-NMR *(e.g.,* using a 300 MHz Gemini 300 NMR Spectrometer System manufactured by Varian).

### [Fillers]

As used herein, the term "reinforcing" with respect to "reinforcing carbon black filler," "reinforcing silica filler," and "reinforcing filler" generally should be understood to encompass both fillers that are traditionally described as reinforcing as well as fillers that may traditionally be described as semi-reinforcing. Traditionally, the term "reinforcing filler" is used to refer to a particulate material that has a nitrogen absorption specific surface area (N₂SA) of more than about 100 m²/g, and in certain instances more than 100 m²/g, more than about 125 m²/g, more than 125 m²/g, or even more than about 150 m²/g or more than 150 m²/g. Alternatively (or additionally), the traditional use of the term "reinforcing filler" can also be used to refer to a particulate material that has a particle size of about 10 nm to about 50 nm (including 10 nm to 50 nm). Traditionally, the term "semi-reinforcing filler" is used to refer to a filler that is intermediary in either particle size, surface area (N₂SA), or both, to a non-reinforcing filler (as discussed below) and a reinforcing filler. In certain embodiments of the first embodiment disclosed herein, the term "reinforcing filler" is used to refer to a particulate material that has a nitrogen absorption specific surface area (N₂SA) of about 20 m²/g or greater, including 20 m²/g or greater, more than about 50 m²/g, more than 50 m²/g, more than about 100 m²/g, more than 100 m²/g , more than about 125 m²/g, and more than 125 m²/g. In certain embodiments of the first embodiment disclosed herein, the term "reinforcing filler" is used to refer to a particulate material that has a particle size of about 10 nm up to about 1000 nm, including 10 nm to 1000 nm, about 10 nm up to about 50 nm, or 10 nm to 50 nm.

### (Reinforcing Silica Filler)

As mentioned above, according to the first embodiment, the tread rubber composition comprises (includes) at least one reinforcing silica filler in an amount of 81 phr to 120 phr *(e.g.,* 81 phr, 84 phr, 85 phr, 89 phr, 90 phr, 91 phr, 94 phr, 95 phr, 99 phr, 100 phr, 101 phr, 104 phr, 105 phr, 109 phr, 110 phr, 111 phr, 114 phr, 115 phr, 119 phr, or 120, phr). In certain embodiments of the first embodiment, the tread rubber composition comprises (includes) at least one reinforcing silica filler in an amount of 90 phr to 110 phr *(e.g.,* 90 phr, 91 phr, 92 phr, 93 phr, 94 phr, 95 phr, 96 phr, 97 phr, 98 phr, 99 phr, 100 phr, 101 phr, 102 phr, 103 phr, 104 phr, 105 phr, 106 phr, 107 phr, 108 phr, 109 phr, or 110 phr). According to the first embodiment, one or more than one reinforcing silica filler may be utilized; in those embodiments where more than one reinforcing silica filler is utilized, the foregoing amounts refer to the total amount of all reinforcing silica fillers. In certain embodiments of the first embodiment, only one reinforcing silica filler is utilized.

According to the first embodiment, the particular type of silica for the at least one reinforcing silica filler may vary. Non-limiting examples of reinforcing silica fillers suitable for use in certain embodiments of the first embodiment include, but are not limited to, precipitated amorphous silica, wet silica (hydrated silicic acid), dry silica (anhydrous silicic acid), fumed silica, calcium silicate and the like. Other suitable reinforcing silica fillers for use in certain embodiments of the first embodiment include, but are not limited to, aluminum silicate, magnesium silicate (Mg₂SiO₄, MgSiO₃ etc.), magnesium calcium silicate (CaMgSiO₄), calcium silicate (Ca₂SiO₄ etc.), aluminum silicate (Al₂SiO₅, Al₄.3SiO₄.5H₂O etc.), aluminum calcium silicate (Al₂O₃.CaO₂SiO₂, etc.), and the like. Among the listed reinforcing silica fillers, precipitated amorphous wet-process, hydrated silica fillers are preferred. Such reinforcing silica fillers are produced by a chemical reaction in water, from which they are precipitated as ultrafine, spherical particles, with primary particles strongly associated into aggregates, which in turn combine less strongly into agglomerates. The surface area, as measured by the BET method, is a preferred measurement for characterizing the reinforcing character of different reinforcing silica fillers. In certain embodiments of the first embodiment disclosed herein, the rubber composition comprises a reinforcing silica filler having a surface area (as measured by the BET method) of about 100 m²/g to about 400 m²/g, 100 m²/g to 400 m²/g, about 100 m²/g to about 350 m²/g, or 100 m²/g to 350 m²/g. In certain embodiments of the first embodiment disclosed herein, the rubber composition comprises a reinforcing silica filler having a BET surface area of about 150 m²/g to about 400 m²/g, 150 m²/g to 400 m²/g *(e.g.,* 150 m²/g, 160 m²/g, 170 m²/g, 180 m²/g, 190 m²/g, 200 m²/g, 210 m²/g, 220 m²/g, 230 m²/g, 240 m²/g, 250 m²/g, 260 m²/g, 270 m²/g, 280 m²/g, 290 m²/g, 300 m²/g, 310 m²/g, 320 m²/g, 330 m²/g, 340 m²/g, 350 m²/g, 360 m²/g, 370 m²/g, 380 m²/g, 390 m²/g, or 400 m²/g), with the ranges of about 170 m²/g to about 350 m²/g, 170 m²/g to 350 m²/g *(e.g.,* 170 m²/g, 180 m²/g, 190 m²/g, 200 m²/g, 210 m²/g, 220 m²/g, 230 m²/g, 240 m²/g, 250 m²/g, 260 m²/g, 270 m²/g, 280 m²/g, 290 m²/g, 300 m²/g, 310 m²/g, 320 m²/g, 330 m²/g, 340 m²/g, or 350 m²/g), about 170 m²/g to about 320 m²/g, and 170 m²/g to 320 m²/g *(e.g.,* 170 m²/g, 180 m²/g, 190 m²/g, 200 m²/g, 210 m²/g, 220 m²/g, 230 m²/g, 240 m²/g, 250 m²/g, 260 m²/g, 270 m²/g, 280 m²/g, 290 m²/g, 300 m²/g, 310 m²/g, or 320 m²/g) being included; in certain such embodiments the only silica filler present in the rubber composition has a BET surface area within one of the foregoing ranges. In other embodiments of the first embodiment disclosed herein, the rubber composition comprises a reinforcing silica filler having a BET surface of about 100 m²/g to about 140 m²/g, 100 m²/g to 140 m²/g *(e.g.,* 100 m²/g, 105 m²/g, 110 m²/g, 115 m²/g, 120 m²/g, 125 m²/g, 130 m²/g, 135 m²/g, or 140 m²/g), about 100 m²/g to about 125 m²/g, 100 m²/g to 125 m²/g *(e.g.,* 100 m²/g, 105 m²/g, 110 m²/g, 115 m²/g, 120 m²/g, or 125 m²/g), about 100 m²/g to about 120 m²/g, or 100 to 120 m²/g *(e.g.,* 100 m²/g, 105 m²/g, 110 m²/g, 115 m²/g, or 120 m²/g); in certain such embodiments the only silica filler present in the rubber composition has a BET surface area within one of the foregoing ranges. In certain embodiments of the first embodiment disclosed herein, the rubber composition comprises reinforcing silica filler having a pH of about 5.5 to about 8, 5.5 to 8 *(e.g.,* 5.5, 5.7, 5.9, 6.1, 6.3, 6.5, 6.7, 6.9, 7.1, 7.3, 7.5, 7.7, 7.9, or 8), about 6 to about 8, 6 to 8 *(e.g.,* 6, 6.2, 6.4, 6.6, 6.8, 7, 7.2, 7.4, 7.6, 7.8, or 8), about 6 to about 7.5, 6 to 7.5, about 6.5 to about 8, 6.5 to 8, about 6.5 to about 7.5, 6.5 to 7.5, about 5.5 to about 6.8, or 5.5 to 6.8. Some of the commercially available reinforcing silica fillers which can be used in certain embodiments of the first embodiment include, but are not limited to, Hi-Sil^{®} EZ120G, Hi-Sil^{®} EZ120G-D, Hi-Sil^{®} 134G, Hi-Sil^{®} EZ 160G, Hi-Sil^{®} EZ 160G-D, Hi-Sil^{®} 190, Hi-Sil^{®} 190G-D, Hi-Sil^{®} EZ 200G, Hi-Sil^{®} EZ 200G-D, Hi-Sil^{®} 210, Hi-Sil^{®} 233, Hi-Sil^{®} 243LD, Hi-Sil^{®} 255CG-D, Hi-Sil^{®} 315-D, Hi-Sil^{®} 315G-D, Hi-Sil^{®} HDP 320G and the like, produced by PPG Industries (Pittsburgh, Pa.) As well, a number of useful commercial grades of different reinforcing silica fillers are also available from Evonik Corporation (e.g., Ultrasil^{®} 320 GR, Ultrasil^{®} 5000 GR, Ultrasil^{®} 5500 GR, Ultrasil^{®} 7000 GR, Ultrasil^{®} VN2 GR, Ultrasil^{®} VN2, Ultrasil^{®} VN3, Ultrasil^{®} VN3 GR, Ultrasil^{®} 7000 GR, Ultrasil^{®} 7005, Ultrasil^{®} 7500 GR, Ultrasil^{®} 7800 GR, Ultrasil^{®} 9500 GR, Ultrasil^{®} 9000 G, Ultrasil^{®} 9100 GR), and Solvay (e.g., Zeosil^{®} 1115MP, Zeosil^{®} 1085GR, Zeosil^{®} 1165MP, Zeosil^{®} 1200MP, Zeosil^{®} Premium, Zeosil^{®} 195HR, Zeosil^{®} 195GR, Zeosil^{®} 185GR, Zeosil^{®} 175GR, and Zeosil^{®} 165 GR).

In certain embodiments of the first embodiment disclosed herein, one or more than one silica coupling agent may also (optionally) be utilized. Silica coupling agents are useful in preventing or reducing aggregation of the silica filler in rubber compositions. Aggregates of the silica filler particles are believed to increase the viscosity of a rubber composition, and, therefore, preventing this aggregation reduces the viscosity and improves the processability and blending of the rubber composition.

Generally, any conventional type of silica coupling agent can be used, such as those having a silane and a constituent component or moiety that can react with a polymer, particularly a vulcanizable polymer. The silica coupling agent acts as a connecting bridge between silica and the polymer. Suitable silica coupling agents for use in certain embodiments of the first embodiment disclosed herein include those containing groups such as alkyl alkoxy, mercapto, blocked mercapto, sulfide-containing (e.g., monosulfide-based alkoxy-containing, disulfide-based alkoxy-containing, tetrasulfide-based alkoxy-containing), amino, vinyl, epoxy, and combinations thereof. In certain embodiments, the silica coupling agent can be added to the rubber composition in the form of a pre-treated silica; a pre-treated silica has been pre-surface treated with a silane prior to being added to the rubber composition. The use of a pre-treated silica can allow for two ingredients *(i.e.,* silica and a silica coupling agent) to be added in one ingredient, which generally tends to make rubber compounding easier.

Alkyl alkoxysilanes have the general formula R¹⁰ₚSi(OR¹¹)₄₋ₚ where each R¹¹ is independently a monovalent organic group, and p is an integer from 1 to 3, with the proviso that at least one R¹⁰ is an alkyl group. Preferably p is 1. Generally, each R¹⁰ independently comprises C₁ to C₂₀ aliphatic, C₅ to C₂₀ cycloaliphatic, or C₆ to C₂₀ aromatic; and each R¹¹ independently comprises C₁ to C₆ aliphatic. In certain exemplary embodiments, each R¹⁰ independently comprises C₆ to C₁₅ aliphatic and in additional embodiments each R¹⁰ independently comprises Cs to C₁₄ aliphatic. Mercapto silanes have the general formula HS-R¹³-Si(R¹⁴)(R¹⁵)₂ where R¹³ is a divalent organic group, R¹⁴ is a halogen atom or an alkoxy group, each R¹⁵ is independently a halogen, an alkoxy group or a monovalent organic group. The halogen is chlorine, bromine, fluorine, or iodine. The alkoxy group preferably has 1-3 carbon atoms. Blocked mercapto silanes have the general formula B-S-R¹⁶-Si-X₃ with an available silyl group for reaction with silica in a silica-silane reaction and a blocking group B that replaces the mercapto hydrogen atom to block the reaction of the sulfur atom with the polymer. In the foregoing general formula, B is a block group which can be in the form of an unsaturated heteroatom or carbon bound directly to sulfur via a single bond; R¹⁶ is C₁ to C₆ linear or branched alkylidene and each X is independently selected from the group consisting of C₁ to C₄ alkyl or C₁ to C₄ alkoxy.

Non-limiting examples of alkyl alkoxysilanes suitable for use in certain embodiments of the first embodiment include, but are not limited to, octyltriethoxysilane, octyltrimethoxysilane, trimethylethoxysilane, cyclohexyltriethoxysilane, isobutyltriethoxy-silane, ethyltrimethoxysilane, cyclohexyl-tributoxysilane, dimethyldiethoxysilane, methyltriethoxysilane, propyltriethoxysilane, hexyltriethoxysilane, heptyltriethoxysilane, nonyltriethoxysilane, decyltriethoxysilane, dodecyltriethoxysilane, tetradecyltriethoxysilane, octadecyltriethoxysilane, methyloctyldiethoxysilane, dimethyldimethoxysilane, methyltrimethoxysilane, propyltrimethoxysilane, hexyltrimethoxysilane, heptyltrimethoxysilane, nonyltrimethoxysilane, decyltrimethoxysilane, dodecyltrimethoxysilane, tetradecyltrimethoxysilane, octadecyl-trimethoxysilane, methyloctyl dimethoxysilane, and mixtures thereof.

Non-limiting examples of bis(trialkoxysilylorgano)polysulfides suitable for use in certain embodiments of the first embodiment include bis(trialkoxysilylorgano) disulfides and bis(trialkoxysilylorgano)tetrasulfides. Specific non-limiting examples of bis(trialkoxysilylorgano)disulfides include, but are not limited to, 3,3'-bis(triethoxysilylpropyl) disulfide, 3,3'-bis(trimethoxysilylpropyl)disulfide, 3,3'-bis(tributoxysilylpropyl)disulfide, 3,3'-bis(tri-t-butoxysilylpropyl)disulfide, 3,3'-bis(trihexoxysilylpropyl)disulfide, 2,2'-bis(dimethylmethoxysilylethyl)disulfide, 3,3'-bis(diphenylcyclohexoxysilylpropyl)disulfide, 3,3'-bis(ethyl-di-sec-butoxysilylpropyl)disulfide, 3,3'-bis(propyldiethoxysilylpropyl)disulfide, 12,12'-bis(triisopropoxysilylpropyl)disulfide, 3,3'-bis(dimethoxyphenylsilyl-2-methylpropyl)disulfide, and mixtures thereof. Non-limiting examples of bis(trialkoxysilylorgano)tetrasulfide silica coupling agents suitable for use in certain embodiments of the first embodiment include, but are not limited to, bis(3-triethoxysilylpropyl)tetrasulfide, bis(2-triethoxysilylethyl) tetrasufide, bis(3-trimethoxysilylpropyl)tetrasulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilyl-N,N-dimethylthiocarbamoyl tetrasulfide, 3-trimethoxysilylpropyl-benzothiazole tetrasulfide, 3-triethoxysilylpropylbenzothiazole tetrasulfide, and mixtures thereof. Bis(3-triethoxysilylpropyl)tetrasulfide is sold commercially as Si69^{®} by Evonik Degussa Corporation.

Non-limiting examples of mercapto silanes suitable for use in certain embodiments of first embodiment disclosed herein include, but are not limited to, 1-mercaptomethyltriethoxysilane, 2-mercaptoethyltriethoxysilane, 3-mercaptopropyltriethoxysilane, 3-mercaptopropylmethyldiethoxysilane, 2-mercaptoethyltripropoxysilane, 18-mercaptooctadecyldiethoxychlorosilane, and mixtures thereof.

Non-limiting examples of blocked mercapto silanes suitable for use in certain embodiments of the first embodiment disclosed herein include, but are not limited to, those described in U.S. Pat. Nos. 6,127,468; 6,204,339; 6,528,673; 6,635,700; 6,649,684; and 6,683,135, the disclosures of which are hereby incorporated by reference. Representative examples of the blocked mercapto silanes include, but are not limited to, 2- triethoxysilyl-1-ethylthioacetate; 2-trimethoxysilyl-1-ethylthioacetate; 2-(methyldimethoxysilyl)-1-ethylthioacetate; 3-trimethoxysilyl-1-propylthioacetate; triethoxysilylmethyl-thioacetate; trimethoxysilylmethylthioacetate; triisopropoxysilylmethylthioacetate; methyldiethoxysilylmethylthioacetate; methyldimethoxysilylmethylthioacetate; methyldiisopropoxysilylmethylthioacetate; dimethylethoxysilylmethylthioacetate; dimethylmethoxysilylmethylthioacetate; dimethylisopropoxysilylmethylthioacetate; 2-triisopropoxysilyl-1-ethylthioacetate; 2-(methyldiethoxysilyl)-l-ethylthioacetate, 2-(methyldiisopropoxysilyl)-1-ethylthioacetate; 2-(dimethylethoxysilyl)-1-ethylthioacetate; 2-(dimethylmethoxysilyl)-1-ethylthioacetate; 2-(dimethylisopropoxysilyl)-1-ethylthioacetate; 3-triethoxysilyl-1-propylthioacetate; 3-triisopropoxysilyl-1-propylthioacetate; 3-methyldiethoxysilyl-1-propyl-thioacetate; 3-methyldimethoxysilyl-1-propylthioacetate; 3-methyldiisopropoxysilyl-1-propylthioacetate; 1-(2-triethoxysilyl-1-ethyl)-4-thioacetylcyclohexane; 1-(2-triethoxysilyl-1-ethyl)-3-thioacetylcyclohexane; 2-triethoxysilyl-5-thioacetylnorbornene; 2-triethoxysilyl-4-thioacetylnorbornene; 2-(2-triethoxysilyl-1-ethyl)-5-thioacetylnorbornene; 2-(2-triethoxy-silyl-1-ethyl)-4-thioacetylnorbornene; 1-(1-oxo-2-thia-5-triethoxysilylphenyl)benzoic acid; 6-triethoxysilyl-1-hexylthioacetate; 1-triethoxysilyl-5-hexylthioacetate; 8-triethoxysilyl-1-octylthioacetate; 1-triethoxysilyl-7-octylthioacetate; 6-triethoxysilyl-1-hexylthioacetate; 1-triethoxysilyl-5-octylthioacetate; 8-trimethoxysilyl-1-octylthioacetate; 1-trimethoxysilyl-7-octylthioacetate; 10-triethoxysilyl-1-decylthioacetate; 1-triethoxysilyl-9-decylthioacetate; 1-triethoxysilyl-2-butylthioacetate; 1-triethoxysilyl-3-butylthioacetate; 1-triethoxysilyl-3-methyl-2-butylthioacetate; 1-triethoxysilyl-3-methyl-3-butylthioacetate; 3-trimethoxysilyl-1-propylthiooctanoate; 3-triethoxysilyl-1-propyl-1-propylthiopalmitate; 3-triethoxysilyl-1-propylthiooctanoate; 3-triethoxysilyl-1-propylthiobenzoate; 3-triethoxysilyl-1-propylthio-2-ethylhexanoate; 3-methyldiacetoxysilyl-1-propylthioacetate; 3-triacetoxysilyl-1-propylthioacetate; 2-methyldiacetoxysilyl-1-ethylthioacetate; 2-triacetoxysilyl-1-ethylthioacetate; 1-methyldiacetoxysilyl-1-ethylthioacetate; 1-triacetoxysilyl-1-ethyl-thioacetate; tris-(3-triethoxysilyl-1-propyl)trithiophosphate; bis-(3-triethoxysilyl-1-propyl)methyldithiophosphonate; bis-(3-triethoxysilyl-1-propyl)ethyldithiophosphonate; 3-triethoxysilyl-1-propyldimethylthiophosphinate; 3-triethoxysilyl-1-propyldiethylthiophosphinate; tris-(3-triethoxysilyl-1-propyl)tetrathiophosphate; bis-(3-triethoxysilyl-1-propyl)methyltrithiophosphonate; bis-(3-triethoxysilyl-1-propyl)ethyltrithiophosphonate; 3-triethoxysilyl-1-propyldimethyldithiophosphinate; 3-triethoxysilyl-1-propyldiethyldithiophosphinate; tris-(3-methyldimethoxysilyl-1-propyl)trithiophosphate; bis-(3-methyldimethoxysilyl-1-propyl)methyldithiophosphonate; bis-(3-methyldimethoxysilyl-1-propyl)-ethyldithiophosphonate; 3-methyldimethoxysilyl-1-propyldimethylthiophosphinate; 3-methyldimethoxysilyl-1-propyldiethylthiophosphinate; 3-triethoxysilyl-1-propylmethylthiosulfate; 3-triethoxysilyl-1-propylmethanethiosulfonate; 3-triethoxysilyl-1-propylethanethiosulfonate; 3-triethoxysilyl-1-propylbenzenethiosulfonate; 3-triethoxysilyl-1-propyltoluenethiosulfonate; 3-triethoxysilyl-1-propylnaphthalenethiosulfonate; 3-triethoxysilyl-1-propylxylenethiosulfonate; triethoxysilylmethylmethylthiosulfate; triethoxysilylmethylmethanethiosulfonate; triethoxysilylmethylethanethiosulfonate; triethoxysilylmethylbenzenethiosulfonate; triethoxysilylmethyltoluenethiosulfonate; triethoxysilylmethylnaphthalenethiosulfonate; triethoxysilylmethylxylenethiosulfonate, and the like. Mixtures of various blocked mercapto silanes can be used. A further example of a suitable blocked mercapto silane for use in certain exemplary embodiments is NXT^{™} silane (3-octanoylthio-1-propyltriethoxysilane), commercially available from Momentive Performance Materials Inc. of Albany, NY.

Non-limiting examples of pre-treated silicas *(i.e.,* silicas that have been pre-surface treated with a silane) suitable for use in certain embodiments of the first embodiment disclosed herein include, but are not limited to, Ciptane^{®} 255 LD and Ciptane^{®} LP (PPG Industries) silicas that have been pre-treated with a mercaptosilane, and Coupsil^{®} 8113 (Degussa) that is the product of the reaction between organosilane bis(triethoxysilylpropyl) polysulfide (Si69) and Ultrasil^{®} VN3 silica, Coupsil 6508, Agilon^{®} 400 silica, Agilon 454^{®} silica, and 458^{®} silica from PPG Industries. In those embodiments where the silica comprises a pre-treated silica, the pre-treated silica is used in an amount as previously disclosed for the silica filler *(i.e.,* about 5 to about 200 phr, etc.).

When a silica coupling agent is utilized in an embodiment of the first embodiment, the amount used may vary. In certain embodiments of the first embodiment, the rubber compositions do not contain any silica coupling agent. In other embodiments of the first embodiment, the silica coupling agent is present in an amount sufficient to provide a ratio of the total amount of silica coupling agent to silica filler of about 0.1:100 to about 1:5 (*i.e.*, about 0.1 to about 20 parts by weight per 100 parts of silica), including 0.1:100 to 1:5, about 1:100 to about 1:10, 1:100 to 1:10, about 1:100 to about 1:20, 1:100 to 1:20, about 1:100 to about 1:25, and 1:100 to 1:25 as well as about 1:100 to about 0:100 and 1:100 to 0:100. In certain embodiments according to the first embodiment, the rubber composition comprises about 0.1 phr to about 15 phr silica coupling agent, including 0.1 phr to 15 phr *(e.g.,* 0.1 phr, 0.5 phr, 1 phr, 2 phr, 3 phr, 4 phr, 5 phr, 6 phr, 7 phr, 8 phr, 9 phr, 10 phr, 11 phr, 12 phr, 13 phr, 14 phr, or 15 phr), about 0.1 phr to about 12 phr, 0.1 phr to 12 phr, about 0.1 phr to about 10 phr, 0.1 phr to 10 phr, about 0.1 phr to about 7 phr, 0.1 phr to 7 phr, about 0.1 phr to about 5 phr, 0.1 phr to 5 phr, about 0.1 phr to about 3 phr, 0.1 phr to 3 phr, about 1 phr to about 15 phr, 1 phr to 15 phr *(e.g.,* 1 phr, 2 phr, 3 phr, 4 phr, 5 phr, 6 phr, 7 phr, 8 phr, 9 phr, 10 phr, 11 phr, 12 phr, 13 phr, 14 phr, or 15 phr), about 1 phr to about 12 phr, 1 phr to 12 phr *(e.g.,* 1 phr, 2 phr, 3 phr, 4 phr, 5 phr, 6 phr, 7 phr, 8 phr, 9 phr, 10 phr, 11 phr, or 12 phr), about 1 phr to about 10 phr, 1 phr to 10 phr *(e.g.,* 1 phr, 1.5 phr, 2 phr, 2.5 phr, 3 phr, 3.5 phr, 4 phr, 4.5 phr, 5 phr, 5.5 phr, 6 phr, 6.5 phr, 7 phr, 7.5 phr, 8 phr, 8.5 phr, 9 phr, 9.5 phr, or 10 phr), about 1 phr to about 7 phr, 1 phr to 7 phr, about 1 phr to about 5 phr, 1 phr to 5 phr, about 1 phr to about 3 phr, 1 phr to 3 phr, about 3 phr to about 15 phr, 3 phr to 15 phr, about 3 phr to about 12 phr, 3 phr to 12 phr, about 3 phr to about 10 phr, 3 phr to 10 phr, about 3 phr to about 7 phr, 3 phr to 7 phr, about 3 phr to about 5 phr, 3 phr to 5 phr, about 5 phr to about 15 phr, 5 phr to 15 phr, about 5 phr to about 12 phr, 5 phr to 12 phr, about 5 phr to about 10 phr, 5 phr to 10 phr, about 5 phr to about 7 phr, or 5 phr to 7 phr.

### (Carbon Black Filler)

According to the first embodiment, the tread rubber composition contains a limited amount (if any) of carbon black filler, *i.e.,* no more than 15 phr of carbon black filler *(e.g.,* 15 phr, 14 phr, 13 phr, 12 phr, 11 phr, 10 phr, 9 phr, 8 phr, 7 phr, 6 phr, 5 phr, 4 phr, 3 phr, 2 phr, 1 phr or even 0 phr), no more than 10 phr *(e.g.,* 10 phr, 9 phr, 8 phr, 7 phr, 6 phr, 5 phr, 4 phr, 3 phr, 2 phr, 1 phr, or even 0 phr) of carbon black filler, or no more than 5 phr *(e.g.,* 5 phr, 4 phr, 3 phr, 2 phr, 1 phr or even 0 phr) of carbon black filler. In certain embodiments of the first embodiment, the tread rubber composition contains 0 phr of carbon black filler. In certain embodiments of the first embodiment, the foregoing "limited amounts of carbon black filler" should be understood to refer to reinforcing carbon black filler. In other embodiments of the first embodiment, the foregoing "limited amounts of carbon black filler" should be understood to refer to reinforcing carbon black filler. In yet other embodiments of the first embodiment, the foregoing "limited amounts of carbon black filler" should be understood to refer to all carbon black fillers *(i.e.,* both reinforcing and non-reinforcing carbon black filler).

In those embodiments of the first embodiment where carbon black filler is present, the particular type or types of carbon black utilized may vary. Generally, suitable carbon blacks for use as a reinforcing filler in the rubber composition of certain embodiments of the first embodiment include any of the commonly available, commercially-produced carbon blacks, including those having a surface area of at least about 20 m²/g (including at least 20 m²/g) and, more preferably, at least about 35 m²/g up to about 200 m²/g or higher (including 35 m²/g up to 200 m²/g). Surface area values used herein for carbon blacks are determined by ASTM D-1765 using the cetyltrimethyl-ammonium bromide (CTAB) technique. Among the useful carbon blacks are furnace black, channel blacks, and lamp blacks. More specifically, examples of useful carbon blacks include super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which can be utilized include acetylene blacks. In certain embodiments of the first embodiment, the rubber composition includes a mixture of two or more of the foregoing blacks. Preferably according to the first embodiment, if a carbon black filler is present it consists of only one type (or grade) of reinforcing carbon black. Typical suitable carbon blacks for use in certain embodiments of the first embodiment are N-110, N-220, N-339, N-330, N-351, N-550, and N-660, as designated by ASTM D-1765-82a. The carbon blacks utilized can be in pelletized form or an unpelletized flocculent mass. Preferably, for more uniform mixing, unpelletized carbon black is preferred.

### (Other Reinforcing Fillers)

In certain embodiments of the first embodiment, the tread rubber composition comprises a reinforcing filler other than carbon black or silica *(i.e.,* an additional reinforcing filler). While one or more than one additional reinforcing filler may be utilized, their total amount is preferably limited to no more than 10 phr *(e.g.,* 10 phr, 9 phr, 8 phr, 7 phr, 6 phr, 5 phr, 4 phr, 3 phr, 2 phr, 1 phr or 0 phr), or no more than 5 phr *(e.g.,* 5 phr, 4 phr, 3 phr, 2 phr, 1 phr, or 0 phr). In certain embodiments of the first embodiment, the tread rubber composition contains no additional reinforcing filler *(i.e.,* 0 phr); in other words, in such embodiments no reinforcing filler other than silica and optionally carbon black are present.

In those embodiments of the first embodiment wherein an additional reinforcing filler is utilized, the additional reinforcing filler or fillers may vary. Non-limiting examples of suitable additional reinforcing fillers for use in the tread rubber compositions of certain embodiments of the first embodiment include, but are not limited to, alumina, aluminum hydroxide, clay (reinforcing grades), magnesium hydroxide, boron nitride, aluminum nitride, titanium dioxide, reinforcing zinc oxide, and combinations thereof.

### (Non-Reinforcing Fillers)

In certain embodiments of the first embodiment, the tread rubber composition further comprises at least one non-reinforcing filler. In other embodiments of the first embodiment, the tread rubber composition contains no non-reinforcing fillers (*i.e.*, 0 phr). In embodiments of the first embodiment wherein at least one non-reinforcing filler is utilized, the at least one non-reinforcing filler may be selected from clay (non-reinforcing grades), graphite, magnesium dioxide, aluminum oxide, starch, boron nitride (non-reinforcing grades), silicon nitride, aluminum nitride (non-reinforcing grades), calcium silicate, silicon carbide, ground rubber, and combinations thereof. The term "non-reinforcing filler" is used to refer to a particulate material that has a nitrogen absorption specific surface area (N₂SA) of less than about 20 m²/g (including less than 20 m²/g), and in certain embodiments less than about 10 m²/g (including less than 10 m²/g). The N₂SA surface area of a particulate material can be determined according to various standard methods including ASTM D6556. In certain embodiments, the term "non-reinforcing filler" is alternatively or additionally used to refer to a particulate material that has a particle size of greater than about 1000 nm (including greater than 1000 nm). In those embodiments of the first embodiment, wherein a non-reinforcing filler is present in the rubber composition, the total amount of non-reinforcing filler may vary but is preferably no more than 10 phr *(e.g.,* 10 phr, 9 phr, 8 phr, 7 phr, 6 phr, 5 phr, 4 phr, 3 phr, 2 phr, or 1 phr), and in certain embodiments 1-10 phr, no more than 5 phr *(e.g.,* 5 phr, 4 phr, 3 phr, 2 phr, or 1 phr), 1-5 phr, or no more than 1 phr.

### [Hydrocarbon Resins]

As mentioned above, according to the first embodiment, the tread rubber composition comprises (includes) (d) 10 phr to 35 phr *(e.g.,* 10 phr, 11 phr, 12 phr, 13 phr, 14 phr, 15 phr, 16 phr, 17 phr, 18 phr, 19 phr, 20 phr, 21 phr, 22 phr, 23 phr, 24 phr, 25 phr, 26 phr, 27 phr, 28 phr, 29 phr, 30 phr, 31 phr, 32 phr, 33 phr, 34 phr, or 35 phr) of at least one hydrocarbon resin having a Tg of about 40°C to about 100°C *(e.g.,* 40°C, 45°C, 50°C, 55°C, 60°C, 65°C, 75°C, 80°C, 90°C, 95°C, or 100°C). In certain embodiments of the first embodiment, the tread rubber composition may comprise (include) two types of hydrocarbon resins. In certain embodiments of the first embodiment, both of the two types of hydrocarbon resins may have a Tg of about 40°C to about 100°C *(e.g.,* 40°C, 45°C, 50°C, 55°C, 60°C, 65°C, 75°C, 80°C, 90°C, 95°C, or 100°C). Hydrocarbon resin Tg can be determined by DSC, according to the procedure discussed above for elastomer Tg measurements. In certain embodiments of the first embodiment, (d) is present in an amount of 15 phr to 30 phr *(e.g.,* 15 phr, 16 phr, 17 phr, 18 phr, 19 phr, 20 phr, 21 phr, 22 phr, 23 phr, 24 phr, 25 phr, 26 phr, 27 phr, 28 phr, 29 phr, or 30 phr), or 20-25 phr *(e.g.,* 20 phr, 21 phr, 22 phr, 23 phr, 24 phr, or 25 phr). As discussed in more detail below, in certain embodiments of the first embodiment, the at least one hydrocarbon resin of (d) comprises an aromatic resin.

As discussed further *infra* according to the first embodiment in addition to controlling the amount of hydrocarbon resin (d) used in the tread rubber compositions, it is also preferable to control the total amount of hydrocarbon resin (d) and oil to with the amounts discussed elsewhere herein.

According to the first embodiment, one or more than one hydrocarbon resin may be utilized in the tread rubber composition and the particular type or types of hydrocarbon resin may vary. When more than one hydrocarbon resin is utilized, the above-discussed amounts should be understood to refer to the total amount of all hydrocarbon resins.

In certain embodiments, the hydrocarbon resin of (d) comprises an aromatic resin optionally in combination with one or more additional resins selected from aliphatic, cycloaliphatic, and terpene resins; in those embodiments of the first embodiment wherein one or more additional resins are present, the total amount of such additional resin(s) is preferably no more than 5 phr, less than 5 phr, less than 4 phr, less than 3 phr, less than 2 phr, or less than 1 phr (and in each instance no more than 10% by weight, preferably no more than 5% by weight of the overall amount of hydrocarbon resin of (d)). In other embodiments of the first embodiment, the hydrocarbon resin of (d) consists of an aromatic resin. When an aromatic resin is used, one or more than one aromatic resin may be utilized. In certain embodiments of the first embodiment, the hydrocarbon resin excludes any terpene resin *(i.e.,* 0 phr of terpene resin is present in the tread rubber composition). As used herein, the term "aromatic resin" should be understood to include both aromatic homopolymer resins and aromatic copolymer resins. An aromatic copolymer resins refers to a hydrocarbon resin which comprises a combination of one or more aromatic monomers in combination with one or more other (non-aromatic) monomers, with the largest amount of any type of monomer being aromatic. An aromatic copolymer resin would include a hydrocarbon resin having 45% by weight aromatic monomers, in addition to 25% by weight cycloaliphatic monomers and 30% by weight aliphatic monomers as well as a hydrocarbon resin having 55% by weight aromatic monomers, in addition to 30% by weight cycloaliphatic monomers and 15% by weight aliphatic monomers. In certain embodiments of the first embodiment, the hydrocarbon resin of (c) comprises one or more aromatic copolymer resins having a majority by weight of all monomers being aromatic *(e.g.,* 51%, 55%, 60%, 65%, etc.). Non-limiting examples of aromatic resins suitable for use as the hydrocarbon resin (d) in certain embodiments of the first embodiment include coumarone-indene resins and alkyl-phenol resins as well as vinyl aromatic homopolymer or copolymer resins such as those including one or more of the following monomers: alpha-methylstyrene, styrene, ortho-methylstyrene, meta-methylstyrene, para-methylstyrene, vinyltoluene, para(tert-butyl)styrene, methoxystyrene, chlorostyrene, hydroxystyrene, vinylmesitylene, divinylbenzene, vinylnaphthalene or any vinyl aromatic monomer resulting from C9 fraction or C8-C10 fraction. Non-limiting examples of vinylaromatic copolymer resins include vinylaromatic/terpene copolymer resins (e.g., limonene/styrene copolymer resins), vinylaromatic/C5 fraction resins *(e.g.,* C5 fraction/styrene copolymer resin), vinylaromatic/aliphatic copolymer resins (e.g., CPD/styrene copolymer resin, and DCPD/styrene copolymer resin). Non-limiting examples of alkyl-phenol resins include alkylphenol-acetylene resins such as p-tert-butylphenol-acetylene resins, alkylphenol-formaldehyde resins (such as those having a low degree of polymerization). Exemplary such aromatic resins are commercially available from various companies including Chemfax, Dow Chemical Company, Eastman Chemical Company, Idemitsu, Neville Chemical Company, Nippon, Polysat Inc., Resinall Corp., and Zeon under various trade names.

In certain embodiments of the first embodiment, the hydrocarbon resin (d) comprises an aromatic resin based upon one or more of the above-mentioned vinyl aromatic monomers (e.g., styrene, alpha-methylstyrene); in certain such embodiments at least 80% by weight, at least 85% by weight, at least 90% by weight, at least 95% by weight, at least 98% by weight, at least 99% by weight, or even 100% by weight of the monomers in the aromatic resin are aromatic monomers. In certain embodiments of the first embodiment, the hydrocarbon resin (d) consists of an aromatic resin based upon one or more of the above-mentioned vinyl aromatic monomers (e.g., styrene, alpha-methylstyrene); in certain such embodiments at least 80% by weight, at least 85% by weight, at least 90% by weight, at least 95% by weight, at least 98% by weight, at least 99% by weight, or even 100% by weight of the monomers in the aromatic resin are aromatic monomers. In certain embodiments of the first embodiment, the aromatic resin of (d) may include a hydrogenated form of one of the aromatic resins discussed above *(i.e.,* a hydrogenated aromatic resin). In other embodiments of the first embodiment, the aromatic resin of (d) excludes any hydrogenated aromatic resin; in other words, in such embodiments, the aromatic resin is not hydrogenated.

As mentioned above, in certain embodiments of the first embodiment, the at least one hydrocarbon resin of (d) comprises (i) an aromatic resin in combination with (ii) an aliphatic resin. Non-limiting examples of aliphatic resins include C5 fraction homopolymer and copolymer resins. The amount of any aliphatic resin used in (d) is preferably limited. According to the first embodiment, the total amount of any aliphatic resin used in combination with the aromatic resin is preferably no more than 5 phr, less than 5 phr, less than 4 phr, less than 3 phr, less than 2 phr, or less than 1 phr (and in each instance no more than 20% by weight, preferably no more than 15% or no more than 10% by weight of the overall amount of hydrocarbon resin of (d)).

As mentioned above, in certain embodiments of the first embodiment, the at least one hydrocarbon resin of (d) comprises (i) an aromatic resin in combination with (ii) a cycloaliphatic resin. Non-limiting examples of cycloaliphatic resins include cyclopentadiene ("CPD") homopolymer or copolymer resins, dicyclopentadiene ("DCPD") homopolymer or copolymer resins, and combinations thereof. The amount of any cycloaliphatic resin used in (d) is preferably limited. According to the first embodiment, the total amount of any cycloaliphatic resin used in combination with the aromatic resin is preferably no more than 5 phr, less than 5 phr, less than 4 phr, less than 3 phr, less than 2 phr, or less than 1 phr (and in each instance no more than 20% by weight, preferably no more than 15% or no more than 10% by weight of the overall amount of hydrocarbon resin of (d)).

As mentioned above, in certain embodiments of the first embodiment the at least one hydrocarbon resin of (d) comprises (i) an aromatic resin in combination with (ii) a terpene resin. Non-limiting examples of terpene resins include alpha-pinene resins, beta-pinene resins, limonene resins (e.g., L-limonene, D-limonene, dipentene which is a racemic mixture of L- and D-isomers), beta-phellandrene, delta-3-carene, delta-2-carene, and combinations thereof. The amount of any terpene resin used in (d) is preferably limited. According to the first embodiment, the total amount of any terpene resin used in combination with the aromatic resin is preferably no more than 5 phr, less than 5 phr, less than 4 phr, less than 3 phr, less than 2 phr, or less than 1 phr (and in each instance no more than 20% by weight, preferably no more than 15% or no more than 10% by weight of the overall amount of hydrocarbon resin of (d)). As mentioned above, in preferred embodiments of the first embodiment, the hydrocarbon resin (d) includes no terpene resin *(i.e.,* 0 phr).

In certain embodiments of the first embodiment, the hydrocarbon resin of (d) comprises two types of resins selected from the group consisting of a C5 resin, a C5-C9 resin, a C9 resin, and a dicyclopentadiene resin. In certain embodiments of the first embodiment, a difference in Tg between the two types of resins is 30°C to 50°C, preferably 35°C to 45°C, more preferably 37°C to 43°C. When the rubber composition comprises only one type of hydrocarbon resin having a high Tg, dry µ is improved but improvement of snow performance is not so large. When the rubber composition comprises two types of hydrocarbon resins having a different Tg respectively, both dry µ and snow performance are highly improved.

The C5 resins refer to C5-based synthetic petroleum resins. Examples of C5 resins include aliphatic petroleum resins obtained by using a Friedel-Crafts catalyst such as AlCl₃ or BF₃ to polymerize a C5 fraction obtained by pyrolysis of naphtha in the petrochemical industry. The C5 fraction usually includes an olefinic hydrocarbon such as 1-pentene, 2-pentene, 2-methyl-1-butene, 2-methyl-2-butene, or 3-methyl-1-butene; a diolefinic hydrocarbon such as 2-methyl-1,3-butadiene, 1,2-pentadiene, 1,3-pentadiene, or 3-methyl-1,2-butadiene; or the like.

The C5-C9 resins refer to C5/C9-based synthetic petroleum resins. Examples of these C5-C9 resins include solid polymers obtained by polymerizing a petroleum-derived C5 fraction and C9 fraction using a Friedel-Crafts catalyst such as AlCl₃ or BF₃. Specific examples include a copolymer having, as main components, styrene, vinyltoluene, α-methylstyrene, indene, and the like.

The C9 resins are, for example, resins resulting from polymerization of a C9 aromatic group that has, as the principal monomers, vinyl toluene, alkyl styrene, and indene, which are C9 fraction by-products produced along with petrochemical raw materials, such as ethylene or propylene, by pyrolysis of naphtha in the petrochemical industry. Specific examples of C9 fractions obtained by pyrolysis of naphtha include vinyltoluene, α-methylstyrene, β-methylstyrene, γ-methylstyrene, o-methylstyrene, p-methylstyrene, and indene.

The dicyclopentadiene resin (DCPD resin) is a petroleum resin manufactured using dicyclopentadiene, which is obtainable by dimerization of cyclopentadiene, as the main raw material.

In certain embodiments of the first embodiment, the hydrocarbon resin (d) has a softening point of about 70°C to about 100°C, 70°C to 100°C *(e.g.,* 70°C, 75°C, 80°C, 85°C, 90°C, 95°C, or 100°C), preferably about 75°C to about 95°C or 75°C to 95°C *(e.g.,* 75°C, 80°C, 85°C, 90°C, or 95°C). Generally, the softening point of a hydrocarbon resin will have a relationship to its Tg such that the Tg is lower than its softening point, and such that the lower the Tg the lower the softening point. As a non-limiting example, for two hydrocarbon resins having Tg's of 70°C and 100°C, the resin with the Tg of 70°C will have a lower softening point than the resin with the Tg of 100°C.

In certain embodiments of the first embodiment, one of the hydrocarbon resin (d) has a Tg of about 70°C to about 100°C, 70°C to 100°C *(e.g.,* 70°C, 75°C, 80°C, 85°C, 90°C, 95°C, or 100°C), preferably about 75°C to about 95°C or 75°C to 95°C *(e.g.,* 75°C, 80°C, 85°C, 90°C, or 95°C), and the other hydrocarbon resin (d) has a Tg of about 30°C to about 70°C, 30°C to 70°C *(e.g.,* 30°C, 35°C, 40°C, 45°C, 50°C, 55°C, 60°C, 65°C or 70°C), preferably about 35°C to about 65°C or 35°C to 65°C *(e.g.,* 35°C, 40°C, 45°C, 50°C, 55°C, 60°C or 65°C).

In certain embodiments of the first embodiment, the hydrocarbon resin (d) meets at least one of the following: (a) a Mw of about 1000 grams/mole to about 4000 grams/mole, 1000 grams/mole to 4000 grams/mole *(e.g.,* 1000 grams/mole, 1100 grams/mole, 1200 grams/mole, 1300 grams/mole, 1400 grams/mole, 1500 grams/mole, 1600 grams/mole, 1700 grams/mole, 1800 grams/mole, 1900 grams/mole, 2000 grams/mole, 2100 grams/mole, 2200 grams/mole, 2300 grams/mole, 2400 grams/mole, 2500 grams/mole, 2600 grams/mole, 2700 grams/mole, 2800 grams/mole, 2900 grams/mole, 3000 grams/mole, 3100 grams/mole, 3200 grams/mole, 3300 grams/mole, 3400 grams/mole, 3500 grams/mole, 3600 grams/mole, 3700 grams/mole, 3800 grams/mole, 3900 grams/mole, or 4000 grams/mole), about 1000 grams/mole to about 3000 grams/mole, 1000 grams/mole to 3000 grams/mole (e.g., 1000 grams/mole, 1100 grams/mole, 1200 grams/mole, 1300 grams/mole, 1400 grams/mole, 1500 grams/mole, 1600 grams/mole, 1700 grams/mole, 1800 grams/mole, 1900 grams/mole, 2000 grams/mole, 2100 grams/mole, 2200 grams/mole, 2300 grams/mole, 2400 grams/mole, 2500 grams/mole, 2600 grams/mole, 2700 grams/mole, 2800 grams/mole, 2900 grams/mole, or 3000 grams/mole), about 1000 grams/mole to about 2500 grams/mole, 1000 grams/mole to 2500 grams/mole (e.g., 1000 grams/mole, 1100 grams/mole, 1200 grams/mole, 1300 grams/mole, 1400 grams/mole, 1500 grams/mole, 1600 grams/mole, 1700 grams/mole, 1800 grams/mole, 1900 grams/mole, 2000 grams/mole, 2100 grams/mole, 2200 grams/mole, 2300 grams/mole, 2400 grams/mole, or 2500 grams/mole), about 1000 grams/mole to about 2000 grams/mole, 1000 grams/mole to 2000 grams/mole (e.g., 1000 grams/mole, 1100 grams/mole, 1200 grams/mole, 1300 grams/mole, 1400 grams/mole, 1500 grams/mole, 1600 grams/mole, 1700 grams/mole, 1800 grams/mole, 1900 grams/mole, or 2000 grams/mole), about 1100 grams/mole to about 1800 grams/mole, or 1100 grams/mole to 1800 grams/mole (e.g., 1100 grams/mole, 1200 grams/mole, 1300 grams/mole, 1400 grams/mole, 1500 grams/mole, 1600 grams/mole, 1700 grams/mole, or 1800 grams/mole); (b) a Mn of about 700 grams/mole to about 1500 grams/mole, 700 grams/mole to 1500 grams/mole (e.g., *700* grams/mole, 800 grams/mole, 900 grams/mole, 1000 grams/mole, 1100 grams/mole, 1200 grams/mole, 1300 grams/mole, 1400 grams/mole, or 1500 grams/mole), about 800 grams/mole to about 1400 grams/mole, 800 grams/mole to 1400 grams/mole (e.g., 800 grams/mole, 900 grams/mole, 1000 grams/mole, 1100 grams/mole, 1200 grams/mole, 1300 grams/mole, or 1400 grams/mole), about 800 grams/mole to about 1300 grams/mole, 800 grams/mole to 1300 grams/mole (e.g., 800 grams/mole, 900 grams/mole, 1000 grams/mole, 1100 grams/mole, 1200 grams/mole, or 1300 grams/mole), about 900 grams/mole to about 1200 grams/mole, or 900 grams/mole to 1200 grams/mole (e.g., 900 grams/mole, 950 grams/mole, 1000 grams/mole, 1050 grams/mole, 1100 grams/mole, 1150 grams/mole, or 1200 grams/mole); or (c) a polydispersity (Mw/Mn) of about 1 to about 2, 1-2 *(e.g.,* 1, 1.1, 1.2, 1.3, 1.4, 1.5, 1.6, 1.7, 1.8, 1.9, or 2), about 1.1 to about 1.8, 1.1-1.8 *(e.g.,* 1.1, 1.2, 1.3, 1.4, 1.5, 1.6, 1.7, or 1.8), about 1.1 to about 1.7, 1.1-1.7 *(e.g.,* 1.1, 1.2, 1.3, 1.4, 1.5, 1.6, or 1.7), about 1.2 to about 1.5, or 1.2 to 1.5 *(e.g.,* 1.2, 1.3, 1.4, or 1.5). In certain embodiments of the first embodiment, the hydrocarbon resin (d) has a Mw according to one of the ranges provided above, in combination with a Mn according to one of the ranges provided above, further in combination with a Mw/Mn according to one of the ranges provided above.

In certain embodiments of the first embodiment, the hydrocarbon resin (d) comprises an aromatic resin (as discussed above) having an aromatic monomer at least about 40% by weight, at least 40% by weight *(e.g.,* 40% by mass, 45% by mass, 50% by mass, 51% by mass, 55% by mass, 60% by weight, or more), about 40% by weight to about 65% by weight, 40 by weight to 65% by weight *(e.g.,* 40% by mass, 42% by mass, 44% by mass, 45% by mass, 46% by mass, 48% by mass, 50% by mass, 52% by mass, 54% by mass, 55% by mass, 56% by mass, 58% by mass, 60% by mass, 62% by mass, 64% by mass, or 65% by weight), at least about 45% by weight, at least 45% by weight *(e.g.,* 45% by mass, 50% by mass, 51% by mass, 55% by mass, 60% by weight, or more), about 45% by weight to about 65% by weight, 45% by weight to 65% by weight *(e.g.,* 45% by mass, 47% by mass, 49% by mass, 50% by mass, 51% by mass, 53% by mass, 55% by mass, 57% by mass, 59% by mass, 60% by mass, 61% by mass, 63% by mass, or 65% by weight), at least 51% by weight *(e.g.,* 51% by mass, 55% by mass, 60% by mass, 65% by weight, or more), about 51% to about 65%, 51% to 65% *(e.g.,* 51%, 52%, 53%, 54%, 55%, 56%, 57%, 58%, 59%, 60%, 61%, 62%, 63%, 64%, or 65%), about 51% to about 60%, 51% to 60% *(e.g.,* 51%, 52%, 53%, 54%, 55%, 56%, 57%, 58%, 59%, or 60%), about 51% to about 55%, or 51% to 55% (e.g, 51%, 52%, 53%, 54%, or 55%). The amounts of aromatic monomer content are weight percentages based upon the total weight of the respective hydrocarbon resin.

### [Oils]

As mentioned above, according to the first embodiment, the tread rubber composition optionally comprises 0 phr to 40 phr *(e.g.,* 40 phr, 39 phr, 38 phr, 37 phr, 36 phr, 35 phr, 34 phr, 33 phr, 32 phr, 31 phr, 30 phr, 29 phr, 28 phr, 27 phr, 26 phr, 25 phr, 24 phr, 23 phr, 22 phr, 21 phr, 20 phr, 19 phr, 18 phr, 17 phr, 16 phr, 15 phr, 14 phr, 13 phr, 12 phr, 11 phr, 10 phr, 9 phr, 8 phr, 7 phr, 6 phr, 5 phr, 4 phr, 3 phr, 2 phr, 1 phr or 0 phr) of oil. In certain embodiments of the first embodiment, the tread rubber composition comprises no more than 30 phr of oil *(e.g.,* 30 phr, 29 phr, 28 phr, 27 phr, 26 phr, 25 phr, 24 phr, 23 phr, 22 phr, 21 phr, 20 phr, 19 phr, 18 phr, 17 phr, 16 phr, 15 phr, 14 phr, 13 phr, 12 phr, 11 phr, 10 phr, 9 phr, 8 phr, 7 phr, 6 phr, 5 phr, 4 phr, 3 phr, 2 phr, 1 phr or 0 phr), no more than 24 phr of oil *(e.g.,* 24 phr, 23 phr, 22 phr, 21 phr, 20 phr, 19 phr, 18 phr, 17 phr, 16 phr, 15 phr, 14 phr, 13 phr, 12 phr, 11 phr, 10 phr, 9 phr, 8 phr, 7 phr, 6 phr, 5 phr, 4 phr, 3 phr, 2 phr, 1 phr or 0 phr). In other embodiments of the first embodiment, the tread rubber composition comprises 10 phr to 40 phr *(e.g.,* 40 phr, 39 phr, 38 phr, 37 phr, 36 phr, 35 phr, 34 phr, 33 phr, 32 phr, 31 phr, 30 phr, 29 phr, 28 phr, 27 phr, 26 phr, 25 phr, 24 phr, 23 phr, 22 phr, 21 phr, 20 phr, 19 phr, 18 phr, 17 phr, 16 phr, 15 phr, 14 phr, 13 phr, 12 phr, 11 phr, or 10 phr), 10 phr to 30 phr *(e.g.,* 30 phr, 29 phr, 28 phr, 27 phr, 26 phr, 25 phr, 24 phr, 23 phr, 22 phr, 21 phr, 20 phr, 19 phr, 18 phr, 17 phr, 16 phr, 15 phr, 14 phr, 13 phr, 12 phr, 11 phr, or 10 phr), 15 phr to 40 phr *(e.g.,* 40 phr, 39 phr, 38 phr, 37 phr, 36 phr, 35 phr, 34 phr, 33 phr, 32 phr, 31 phr, 30 phr, 29 phr, 28 phr, 27 phr, 26 phr, 25 phr, 24 phr, 23 phr, 22 phr, 21 phr, 20 phr, 19 phr, 18 phr, 17 phr, 16 phr, or 15 phr), or 15 phr to 30 phr *(e.g.,* 30 phr, 29 phr, 28 phr, 27 phr, 26 phr, 25 phr, 24 phr, 23 phr, 22 phr, 21 phr, 20 phr, 19 phr, 18 phr, 17 phr, 16 phr, or 15 phr) of oil. The term "oil" is meant to encompass both free oil (which is usually added during the compounding process) and extender oil (which is used to extend a rubber). Thus, by stating, for example, that in certain embodiments "the tread rubber composition comprises no more than 30 phr of oil" it should be understood that the total amount of any free oil and any extender oil is no more than 30 phr. In certain embodiments of the first embodiment, the tread rubber composition contains only free oil in one of the foregoing amounts (e.g., 0 phr to 40 phr, no more than 30 phr, no more than 24 phr, etc.). In other embodiments of the first embodiment, the tread rubber composition contains only extender oil in one of the foregoing amounts (e.g., 0 phr to 40 phr, no more than 30 phr, no more than 24 phr, etc.). In those embodiments of the first embodiment wherein an oil-extended rubber is used, the amount of oil used to prepare the oil-extended rubber may vary; in such embodiments, the amount of extender oil present in the oil-extended rubber (polymer) is 10 parts to 50 parts oil per 100 parts rubber (*e*.*g*., 10 parts, 15 parts, 20 parts, 25 parts, 30 parts, 35 parts, 40 parts, 45 parts or 50 parts oil per 100 parts rubber), preferably 10 parts to 40 parts oil per 100 parts rubber or 20 parts to 40 parts oil per 100 parts rubber. As a non-limiting example, extender oil could be used in an amount of 40 parts oil per 100 parts rubber in an SBR for (i) which SBR is used in an amount of 40 parts in the overall tread rubber composition and, thus, the amount of oil contributed by the oil-extended SBR to the tread rubber composition would be described as "16 phr". When an oil-extended rubber is used in the elastomer component of the tread rubber composition disclosed herein, the amounts specified for (i), (ii) and (iii) should be understood to refer to the amounts of rubber only rather than the amounts of oil-extended rubber. As used herein, "oil" refers to both petroleum based oils (*e*.*g*., aromatic, naphthenic, and low PCA oils) as well as plant oils (such as can be harvested from vegetables, nuts, and seeds). Plant oils will generally comprise triglycerides and the term should be understood to include synthetic triglycerides as well as those actually sourced from a plant.

According to the first embodiment when one or more oils are present in the tread rubber composition, various types of processing and extender oils may be utilized, including, but not limited to aromatic, naphthenic, and low PCA oils (petroleum-sourced or plant-sourced). Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom. Exemplary petroleum-sourced low PCA oils include mild extraction solvates (MES), treated distillate aromatic extracts (TDAE), TRAE, and heavy naphthenics. Exemplary MES oils are available commercially as CATENEX SNR from SHELL, PROREX 15, and FLEXON 683 from EXXONMOBIL, VIVATEC 200 from BP, PLAXOLENE MS from TOTAL FINA ELF, TUDALEN 4160/4225 from DAHLEKE, MES-H from REPSOL, MES from Z8, and OLIO MES S201 from AGIP. Exemplary TDAE oils are available as TYREX 20 from EXXONMOBIL, VIVATEC 500, VIVATEC 180, and ENERTHENE 1849 from BP, and EXTENSOIL 1996 from REPSOL. Exemplary heavy naphthenic oils are available as SHELLFLEX 794, ERGON BLACK OIL, ERGON H2000, CROSS C2000, CROSS C2400, and SAN JOAQUIN 2000L. Exemplary low PCA oils also include various plant-sourced oils such as can be harvested from vegetables, nuts, and seeds. Non-limiting examples include, but are not limited to, soy or soybean oil, sunflower oil (including high oleic sunflower oil), safflower oil, corn oil, linseed oil, cotton seed oil, rapeseed oil, cashew oil, sesame oil, camellia oil, jojoba oil, macadamia nut oil, coconut oil, and palm oil. The foregoing processing oils can be used as an extender oil, *i.e.,* to prepare an oil-extended polymer or copolymer or as a processing or free oil.

In those embodiments of the first embodiment wherein one or more oils are present in the tread rubber composition, the Tg of the oil or oils used may vary. In certain embodiments of the first embodiment, any oil utilized has a Tg of about -40°C to about -100°C, -40°C to -100°C *(e.g.,* -40°C, - 45°C, -50°C, -55°C, -60°C, -65°C, -70°C, -75°C, -80°C, -85°C, -90°C, -95°C, or -100°C), about -40°C to about -90°C, -40°C to -90°C *(e.g.,* -40°C, -45°C, - 50°C, -55°C, -60°C, -65°C, -70°C, -75°C, -80°C, -85°C, or -90°C), about - 45°C to about -85°C, -45°C to -85°C *(e.g.,* -45°C, -50°C, -55°C, -60°C, - 65°C, -70°C, -75°C, -80°C, or -85°C), about -50°C to about -80°C, or -50°C to -80°C *(e.g.,* -50°C, -55°C, -60°C, -65°C, -70°C, -75°C, or -80°C).

In certain embodiments of the first embodiment, the tread rubber composition contains less than 5 phr (*e*.*g*., 4.5 phr, 4 phr, 3 phr, 2 phr, 1 phr, or 0 phr) of MES or TDAE oil, preferably no MES or TDAE oil *(i.e.,* 0 phr). In certain embodiments of the first embodiment, the tread rubber composition contains at least petroleum oil. In certain embodiments of the first embodiment, the tread rubber composition may contain soybean oil. In certain embodiments of the first embodiment, the tread rubber composition contains no sunflower oil (*i.e.*, 0 phr).

In certain embodiments of the first embodiment, the tread rubber composition includes one or more ester plasticizers. Suitable ester plasticizers are known to those of skill in the art and include, but are not limited to, phosphate esters, phthalate esters, adipate esters and oleate esters *(i.e.,* derived from oleic acid). Taking into account that an ester is a chemical compound derived from an acid wherein at least one -OH is replaced with an -O-alkyl group, various alkyl groups may be used in suitable ester plasticizers for use in the tread rubber compositions, including generally linear or branched alkyl of C1 to C20 *(e.g.,* C1, C2, C3, C4, C5, C6, C7, C8, C9, C10, C11, C12, C13, C14, C15, C16, C17, C18, C19, C20), or C6 to C12. Certain of the foregoing esters are based upon acids which have more than one -OH group and, thus, can accommodate one or more than one O-alkyl group (*e*.*g*., trialkyl phosphates, dialkyl phthalates, dialkyl adipates). Non-limiting examples of suitable ester plasticizers include trioctyl phosphate, dioctyl phthalate, dioctyl adipate, nonyl oleate, octyl oleate, and combinations thereof. The use of an ester plasticizer such as one or more of the foregoing may be beneficial to the snow or ice performance of a tire made from a tread rubber composition containing such ester plasticizer at least in part due to the relatively low Tg of ester plasticizers. In certain embodiments of the first embodiment, the tread rubber composition may include one or more ester plasticizers having a Tg of -40°C to -70°C *(e.g.,* - 40°C, -45°C, -50°C, -55°C, -60°C, -65°C, or -70°C), or -50°C to -65°C *(e.g.,* -50°C, -51°C, -52°C, -53°C, -54°C, -55°C, -56°C, -57°C, -58°C, -59°C, - 60°C, -61°C, -62°C, -63°C, -64°C, or -65°C ). In those embodiments of the first embodiment wherein one or more ester plasticizers is utilized the amount utilized may vary. In certain embodiments of the first embodiment, one or more ester plasticizers is used in combination with oil where the oil is present in an amount of 1 phr to no more than 30 phr, or 1 phr to 30 phr. In other embodiments of the first embodiment, one or more ester plasticizers is used without any oil being present in the tread rubber composition *(i.e.,* 0 phr of oil).

In certain embodiments of the first embodiment, the total amount of hydrocarbon resin (d) and oil is no more than 59 phr *(e.g.,* 59 phr, 55 phr, 54 phr, 50 phr, 49 phr, 45 phr, 44 phr, 40 phr, 39 phr, 35 phr, 34 phr, 30 phr, 29 phr, 25 phr, 24 phr, or 20 phr, or less). In certain embodiments of the first embodiment, the total amount of hydrocarbon resin (d) and oil is no more than 50 phr *(e.g.,* 50 phr, 49 phr, 45 phr, 44 phr, 40 phr, 39 phr, 35 phr, 34 phr, 30 phr, 29 phr, 25 phr, 24 phr, or 20 phr, or less). In certain embodiments of the first embodiment, the total amount of hydrocarbon resin (d) and oil is no more than 45 phr *(e.g.,* 45 phr, 44 phr, 40 phr, 39 phr, 35 phr, 34 phr, 30 phr, 29 phr, 25 phr, 24 phr, or 20 phr, or less), no more than 40 phr *(e.g.,* 40 phr, 39 phr, 35 phr, 34 phr, 30 phr, 29 phr, 25 phr, 24 phr, or 20 phr, or less), no more than 35 phr *(e.g.,* 35 phr, 34 phr, 30 phr, 29 phr, 25 phr, 24 phr, or 20 phr, or less), or no more than 30 phr *(e.g.,* 30 phr, 29 phr, 25 phr, 24 phr, or 20 phr, or less). In certain embodiments of the first embodiment, the total amount of hydrocarbon resin (d) and oil is 15 phr to 59 phr *(e.g.,* 15 phr, 19 phr, 20 phr, 24 phr, 25 phr, 29 phr, 30 phr, 34 phr, 35 phr, 39 phr, 40 phr, 44 phr, 45 phr, 49 phr, 50 phr, 54 phr, 55 phr, or 59 phr) or 15 phr to 50 phr *(e.g.,* 15 phr, 19 phr, 20 phr, 24 phr, 25 phr, 29 phr, 30 phr, 34 phr, 35 phr, 39 phr, 40 phr, 44 phr, 45 phr, 49 phr, or 50 phr).

### [Cure Package]

As discussed above, according to the first embodiment disclosed herein, the tread rubber composition includes (further comprises) a cure package. Although the contents of the cure package may vary according to the first embodiment, generally, the cure package includes at least one of: a vulcanizing agent; a vulcanizing accelerator; a vulcanizing activator (*e*.*g*., zinc oxide, stearic acid, and the like); a vulcanizing inhibitor; and an anti-scorching agent. In certain embodiments of the first embodiment, the cure package includes at least one vulcanizing agent, at least one vulcanizing accelerator, at least one vulcanizing activator and optionally a vulcanizing inhibitor and/or an anti-scorching agent. Vulcanizing accelerators and vulcanizing activators act as catalysts for the vulcanization agent. Various vulcanizing inhibitors and anti-scorching agents are known in the art and can be selected by one skilled in the art based on the vulcanizate properties desired.

Examples of suitable types of vulcanizing agents for use in certain embodiments of the first embodiment, include but are not limited to, sulfur or peroxide-based curing components. Thus, in certain such embodiments, the curative component includes a sulfur-based curative or a peroxide-based curative. Examples of specific suitable sulfur vulcanizing agents include "rubbermaker's" soluble sulfur; sulfur donating curing agents, such as an amine disulfide, polymeric polysulfide, or sulfur olefin adducts; and insoluble polymeric sulfur. Preferably, the sulfur vulcanizing agent is soluble sulfur or a mixture of soluble and insoluble polymeric sulfur. For a general disclosure of suitable vulcanizing agents and other components used in curing, e.g., vulcanizing inhibitor and anti-scorching agents, one can refer to Kirk-Othmer, Encyclopedia of Chemical Technology, 3rd ed., Wiley Interscience, N.Y. 1982, Vol. 20, pp. 365 to 468, particularly Vulcanization Agents and Auxiliary Materials, pp. 390 to 402, or Vulcanization by A. Y. Coran, Encyclopedia of Polymer Science and Engineering, Second Edition (1989 John Wiley & Sons, Inc.), both of which are incorporated herein by reference. Vulcanizing agents can be used alone or in combination. Generally, the vulcanizing agents may be used in certain embodiments of the first embodiment in an amount ranging from 0.1 phr to 10 phr, including from 1 phr to 7.5 phr, including from 1 phr to 5 phr, and preferably from 1 phr to 3.5 phr.

Vulcanizing accelerators are used to control the time and/or temperature required for vulcanization and to improve properties of the vulcanizate. Examples of suitable vulcanizing accelerators for use in certain embodiments of the first embodiment disclosed herein include, but are not limited to, thiazole vulcanization accelerators, such as 2-mercaptobenzothiazole, 2,2'-dithiobis(benzothiazole) (MBTS), N-cyclohexyl-2-benzothiazole-sulfenamide (CBS), N-tert-butyl-2-benzothiazolesulfenamide (TBBS), and the like; guanidine vulcanization accelerators, such as diphenyl guanidine (DPG) and the like; thiuram vulcanizing accelerators; carbamate vulcanizing accelerators; and the like. Generally, the amount of the vulcanization accelerator used ranges from 0.1 phr to 10 phr, preferably 0.5 phr to 5 phr. Preferably, any vulcanization accelerator used in the tread rubber compositions of the first embodiment excludes any thiurams such as thiuram monosulfides and thiuram polysulfides (examples of which include TMTM (tetramethyl thiuram monosulfide), TMTD (tetramethyl thiuram disulfide), DPTT (dipentamethylene thiuram tetrasulfide), TETD (tetraethyl thiuram disulfide), TiBTD (tetraisobutyl thiuram disulfide), and TBzTD (tetrabenzyl thiuram disulfide)); in other words, the tread rubber compositions of the first embodiment preferably contain no thiuram accelerators *(i.e.,* 0 phr).

Vulcanizing activators are additives used to support vulcanization. Generally vulcanizing activators include both an inorganic and organic component. Zinc oxide is the most widely used inorganic vulcanization activator. Various organic vulcanization activators are commonly used including stearic acid, palmitic acid, lauric acid, and zinc salts of each of the foregoing. Generally, in certain embodiments of the first embodiment the amount of vulcanization activator used ranges from 0.1 phr to 6 phr *(e.g.,* 0.1 phr, 0.5 phr, 1 phr, 1.5 phr, 2 phr, 2.5 phr, 3 phr, 3.5 phr, 4 phr, 4.5 phr, 5 phr, 5.5 phr, or 6 phr), preferably 0.5 phr to 4 phr *(e.g.,* 0.5 phr, 1 phr, 1.5 phr, 2 phr, 2.5 phr, 3 phr, 3.5 phr, or 4 phr). In certain embodiments of the first embodiment, one or more vulcanization activators are used which includes one or more thiourea compounds (used in the of the foregoing amounts), and optionally in combination with one or more of the foregoing vulcanization activators. Generally, a thiourea compound can be understood as a compound having the structure (R¹)(R²)NS(=C)N(R³)(R⁴) wherein each of R¹, R², R³, and R⁴ are independently selected from H, alkyl, aryl, and N-containing substituents (e.g., guanyl). Optionally, two of the foregoing structures can be bonded together through N (removing one of the R groups) in a dithiobiurea compound. In certain embodiments, one of R¹ or R² and one of R³ or R⁴ can be bonded together with one or more methylene groups (-CH₂-) therebetween. In certain embodiments of the first embodiment, the thiourea has one or two of R¹, R², R³ and R⁴ selected from one of the foregoing groups with the remaining R groups being hydrogen. Exemplary alkyl includes C1-C6 linear, branched or cyclic groups such as methyl, ethyl, propyl, iso-propyl, butyl, iso-butyl, pentyl, hexyl, and cyclohexyl. Exemplary aryls include C6-C12 aromatic groups such as phenyl, tolyl, and naphthyl. Exemplary thiourea compounds include, but are not limited to, dihydrocarbylthioureas such as dialkylthioureas and diarylthioureas. Non-limiting examples of particular thiourea compounds include one or more of thiourea, N,N'-diphenylthiourea, trimethylthiourea, N,N'-diethylthiourea (DEU), N,N'-dimethylthiourea, N,N'-dibutylthiourea, ethylenethiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2,5-dithiobiurea, guanylthiourea, 1-(1-naphthyl)-2-thiourea, 1-phenyl-2-thiourea, p-tolylthiourea, and o-tolylthiourea. In certain embodiments of the first embodiment, the activator includes at least one thiourea compound selected from thiourea, N,N'-diethylthiourea, trimethylthiourea, N,N'-diphenylthiourea, and N-N'-dimethylthiourea.

Vulcanization inhibitors are used to control the vulcanization process and generally retard or inhibit vulcanization until the desired time and/or temperature is reached. Common vulcanization inhibitors include, but are not limited to, PVI (cyclohexylthiophthalmide) from Santogard. Generally, in certain embodiments of the first embodiment the amount of vulcanization inhibitor is 0.1 phr to 3 phr, preferably 0.5 phr to 2 phr.

### [Preparing The Rubber Compositions]

The particular steps involved in preparing the tread rubber compositions of the first embodiment disclosed herein are generally those of conventionally practiced methods comprising mixing the ingredients in at least one master-batch stage and a final productive mixing stage. In certain embodiments of the first embodiment, the tread rubber composition is prepared by combining the ingredients for the rubber composition (as disclosed above) by methods known in the art, such as, for example, by kneading the ingredients together in a Banbury mixer or on a milled roll. Such methods generally include at least one master-batch mixing stage and a final productive mixing stage. The term "master-batch stage" is known to those of skill in the art and generally understood to be a mixing stage (or stages) where no vulcanizing agents or vulcanization accelerators are added. The term "final productive mixing stage" is also known to those of skill in the art and generally understood to be the mixing stage where the vulcanizing agents and vulcanization accelerators are added into the rubber composition. In certain embodiments of the first embodiment, the tread rubber composition is prepared by a process comprising more than one master-batch mixing stage.

Generally, the rubbers (or polymers) and at least one reinforcing filler (as well as any silane coupling agent and oil) will be added in one or more master-batch mixing stage (or stages). Generally, at least the vulcanizing agent component and the vulcanizing accelerator component of a cure package will be added in a final productive mixing stage.

In certain embodiments of the first embodiment, the tread rubber composition is prepared using a process wherein at least one master batch mixing stage conducted at a temperature of about 130°C to about 200°C. In certain embodiments of the first embodiment, the tread rubber composition is prepared using a final productive mixing stage conducted at a temperature below the vulcanization temperature in order to avoid unwanted pre-cure of the rubber composition. Therefore, the temperature of the productive or final mixing stage generally should not exceed about 120°C and is typically about 40°C to about 120°C, or about 60°C to about 110°C and, especially, about 75°C to about 100°C. In certain embodiments of the first embodiment, the tread rubber composition is prepared according to a process that includes at least one master-batch mixing stage and at least one final productive mixing stage. The use of silica fillers may optionally necessitate a separate re-mill stage for separate addition of a portion or all of such filler. This stage often is performed at temperatures similar to, although often slightly lower than, those employed in the masterbatch stage, *i.e.,* ramping from about 90°C to a drop temperature of about 150°C.

### [Tire Tread Properties]

The use of the tire tread rubber composition of the first embodiment in tires, may result in a tire having improved or desirable tread properties. These improved or desirable properties may include one or more of dry µ, snow or ice traction, wet traction, or dry handling. While these properties may be measured by various methods, the values referred to herein for dry µ, snow or ice traction, wet traction, and dry handling refer to tan δ and E' values measured at the following temperatures and according to the following procedures. Tan δ and E' values can be measured with a dynamic mechanical thermal spectrometer (manufactured by Ueshima Seisakusho Co., Ltd.) under the following conditions: measurement mode: tensile test mode; measuring frequency: 52 Hz; applying 0.1% strain from -50°C to -10°C and 1% strain from -10°C to 65°C; measuring temperatures of -20°C, 0°C, and 30°C; sample shape: 2.0 mm thick. Measurement is made upon a cured sample of rubber (cured for 15 minutes at 170°C). A rubber composition's E' at -20°C is indicative of its snow or ice traction when incorporated into a tire tread, its tan δ at 0°C is indicative of its wet traction when incorporated into a tire tread, its E' at 30°C is indicative of its dry handling when incorporated into a tire tread, and its tan δ at 30°C and E' at 30°C are indicative of its dry µ when incorporated into a tire tread.

This application discloses several numerical range limitations that support any range within the disclosed numerical ranges, even though a precise range limitation is not stated verbatim in the specification, because the embodiments of the compositions and methods disclosed herein could be practiced throughout the disclosed numerical ranges. With respect to the use of substantially any plural or singular terms herein, those having skill in the art can translate from the plural to the singular or from the singular to the plural as is appropriate to the context or application. The various singular or plural permutations may be expressly set forth herein for sake of clarity.

It will be understood by those within the art that, in general, terms used herein, and especially in the appended claims are generally intended as "open" terms. For example, the term "including" should be interpreted as "including but not limited to", the term "having" should be interpreted as "having at least", the term "includes" should be interpreted as "includes but is not limited to". It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" *(e.g.,* "a" or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). It will be further understood by those within the art that virtually any disjunctive word or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

All references, including but not limited to patents, patent applications, and non-patent literature are hereby incorporated by reference herein in their entirety.

While various aspects and embodiments of the compositions and methods have been disclosed herein, other aspects and embodiments will be apparent to those skilled in the art. The various aspects and embodiments disclosed herein are for purposes of illustration and are not intended to be limiting, with the true scope and spirit being indicated by the claims.

### EXAMPLES

In below, the present disclosure is described in detail with reference to Examples; however, the present disclosure is not limited at all to the following Examples.

Rubber compositions were manufactured according to the formulations of Table 1 using a general Banbury mixer. The rubber compositions thus obtained were evaluated for wet traction, dry µ, dry handling, and snow traction. The results are provided in Table 1.

Evaluation method for (1) Wet traction, (2) Dry µ, (3) Dry handling, and (4) Snow traction

Tan δ and E' values were measured with a dynamic mechanical thermal spectrometer (manufactured by Ueshima Seisakusho Co., Ltd.) under the following conditions: measurement mode: tensile test mode; measuring frequency: 52 Hz; applying 0.1% strain from -50°C to -10°C and 1% strain from -10°C to 65°C; measuring temperatures of -20°C, 0°C, and 30°C; sample shape: 2.0 mm thick. Measurement is made upon a cured sample of rubber (cured for 15 minutes at 170°C). A rubber composition's E' at -20°C is indicative of its snow traction when incorporated into a tire tread, its tan δ at 0°C is indicative of its wet traction when incorporated into a tire tread, its E' at 30°C is indicative of its dry handling when incorporated into a tire tread, and its tan δ at 30°C and E' at 30°C are indicative of its dry µ when incorporated into a tire tread. Each of (1) tan δ at 0°C, (2) dry µ calculated from tan δ at 30°C and E' at 30°C, (3) E' at 30°C, and (4) E' at -20°C is expressed as an index, with that of Comparative Example 1 as 100.

**[Table 1]**

| | | | Example 1 | Comparative Example 1 |
|---|---|---|---|---|
| Formulation | BR ^{∗}1 | phr (parts by mass) | 50 | - |
| | SBR1 ^{∗}2 | | 30 | - |
| | SBR2 ^{∗}3 | | 20 | - |
| | SBR3 ^{∗}4 | | - | 27.5 |
| | SBR4 ^{∗}5 | | - | 72.5 |
| | Carbon black ^{∗}6 | | 7 | 38 |
| | Silica ^{∗}7 | | 88 | 27 |
| | Resin1 ^{∗}8 | | 10 | - |
| | Resin2 ^{∗}9 | | 8 | - |
| | Stearic acid | | 2 | 1.5 |
| | ZnO | | 2.5 | 2.5 |
| | Cure package ^{∗}10 | | 4.1 | 3.2 |
| | Sulfer | | 1.7 | 2 |
| Vinyl bond conetnt in Butadiene component of Elastomer | | % | 14.7 | 16 |
| Performance | Wet Traction | index | 97 | 100 |
| | Dry µ | | 118 | 100 |
| | Dry Handling | | 102 | 100 |
| | Snow Traction | | 147 | 100 |

| | | | | |
|---|---|---|---|---|
| **[0116]** ^{∗}1 BR1: polybutadiene rubber, cis bond content = 96%, Tg = - 104°C ^{∗}2 SBR1: styrene-butadiene rubber, styrene monomer content = 25%, vinyl bond content = 15%, Mw = 708×10³, Mn = 275×10³, Mw/Mn = 2.57, Tg = -60°C, 37.5 phr oil-extended, the amount of the non-oil-extended component in 41.25 phr is shown in table ^{∗}3 SBR2: styrene-butadiene rubber, styrene monomer content = 25%, vinyl bond content = 55%, Mw = 460×10³, Mn = 249×10³, Mw/Mn = 1.85, Tg = -30°C ^{∗}4 SBR3: styrene-butadiene rubber, styrene monomer content = 38%, vinyl bond content = 16%, Mw = 678×10³, Mn = 187×10³, Mw/Mn = 3.62, Tg = -40°C ^{∗}5 SBR4: styrene-butadiene rubber, styrene monomer content = 24%, vinyl bond content = 16%, Mw = 707×10³, Mn = 199×10³, Mw/Mn = 3.55, Tg = -58°C ^{∗}6 Carbon black: manufactured by Tokai Carbon Co., Ltd., trade name "SEAST 600P" ^{∗}7 Silica: manufactured by Tosoh Silica Corporation, trade name "Nipsil^{®} AQ" ^{∗}8 Resin1: C5-C9 resin, Tg = 50°C ^{∗}9 Resin2: C9 resin, Tg = 90°C ^{∗}10 Cure package: trade name "SOXINOL^{®} D" manufactured by Sumitomo Chemical Co., Ltd. is included | | | | |

As seen from Table 1, Example 1 is superior to Comparative Example 1 in the wet traction, dry µ, dry handling, and snow traction.

## Claims

1. A tire tread rubber composition comprising:
(a) 100 parts of an elastomer component comprising
(i) 30-60 parts of styrene-butadiene rubber, and
(ii) 30-60 parts of polybutadiene rubber having a cis bond content of at least 95% and a Tg of less than -101°C,
wherein the elastomer component has a vinyl bond content of 8% to 20%,
(b) at least one reinforcing silica filler in an amount of 81-120 phr,
(c) no more than 15 phr of carbon black filler,
(d) 10-35 phr of at least one hydrocarbon resin having a Tg of about 40°C to about 100°C, and
(e) a cure package.

2. The tire tread rubber composition of claim 1, wherein the styrene-butadiene rubber comprises two or more types of styrene-butadiene rubbers.

3. The tire tread rubber composition of claim 2, wherein a maximum difference in Tg among the two or more types of styrene-butadiene rubbers is 20°C to 40°C.

4. The tire tread rubber composition of any one of claims 1 to 3, wherein the total amount of (i) and (ii) is 100 parts.

5. The tire tread rubber composition of any one of claims 1 to 4, wherein the elastomer component is free of natural rubber and polyisoprene.

6. The tire tread rubber composition of any one of claims 1 to 5, wherein the hydrocarbon resin of (d) comprises an aromatic resin.

7. The tire tread rubber composition of any one of claims 1 to 5, wherein the hydrocarbon resin of (d) comprises two types of resins selected from the group consisting of a C5 resin, a C5-C9 resin, a C9 resin, and a dicyclopentadiene resin.

8. The tire tread rubber composition of claim 7, wherein a difference in Tg between the two types of resins is 30°C to 50°C.

9. The tire tread rubber composition of any one of claims 1 to 8 having a total oil content of 15-25 phr.

10. A tire including a tread comprising the tire tread rubber composition of any one of claims 1 to 9.
